# EUROPEAN PATENT SPECIFICATION

(11) **EP 4 001 786 B1**
(45) Date of publication and mention of the grant of the patent: **10.05.2023**
(21) Application number: 19945111.3
(22) Date of filing: 06.12.2019
(51) Int. Cl.: F24F 5/00, F25B 5/04, F25B 25/00, F25B 40/06, F25B 41/30, F25B 41/39

(54) **AIR CONDITIONER AND CONTROL METHOD THEREFOR, OPERATION CONTROL APPARATUS AND STORAGE MEDIUM**
KLIMAANLAGE UND STEUERVERFAHREN DAFÜR, BETRIEBSSTEUERVORRICHTUNG UND SPEICHERMEDIUM
CLIMATISEUR ET PROCÉDÉ DE COMMANDE ASSOCIÉ, APPAREIL DE COMMANDE DE FONCTIONNEMENT ET SUPPORT DE STOCKAGE

(30) Priority: 11.09.2019 CN 201910860688
(43) Date of publication of application: 25.05.2022
(73) Proprietor: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: ZHOU, Hongliang, Foshan, Guangdong 528311 (CN); YUE, Bao, Foshan, Guangdong 528311 (CN); LIU, Hecheng, Foshan, Guangdong 528311 (CN); OMORI, Hiroshi, Foshan, Guangdong 528311 (CN)
(74) Representative: Whitlock, Holly Elizabeth Ann
(86) International application number: PCT/CN2019/123635
(87) International publication number: WO 2021/047076

(56) References cited:
- CN-A- 1 451 916
- CN-A- 1 451 916
- CN-A- 101 344 296
- CN-A- 108 870 596
- CN-A- 108 870 596
- CN-Y- 2 802 328
- DE-A1-102017 214 672
- JP-A- 2012 026 686
- US-A1- 2011 067 427

## Description

### FIELD

The present invention relates to the field of air conditioners, and particularly to an air conditioner, a control method for the air conditioner, an operation control apparatus and a computer readable storage medium.

### BACKGROUND

Existing air conditioners are provided with an energy storage apparatus, and an operation mode thereof is roughly as follows: the air conditioner operates in an energy storage mode, so that the energy storage apparatus stores energy in the energy storage mode; and after the energy storage apparatus completes the energy storage in the energy storage mode, the air conditioner works by using the energy stored by the energy storage apparatus, so that the use continuity of products with the structure is poor, and different requirements of users are difficult to meet. US 2011/067427 A1 discloses an air conditioning device comprising an energy storage device which is used both as a heat storage or a cold storage by directing the refrigerant through different refrigerant circulation lines or bypasses accordingly.

### SUMMARY

In order to solve at least one of the above technical problems, a purpose of the present invention is to provide an air conditioner.

Another purpose of the present invention is to provide a control method for the air conditioner as defined in claim 15.

To realize the above purposes, The first aspect of the present invention provides an air conditioner as defined in claim 1, which includes a first medium circulating system including a first heat exchanging unit, a second heat exchanging unit, a fifth heat exchanging unit, a first throttling unit and a second throttling unit, wherein the first heat exchanging unit is serially connected between the first throttling unit and the second throttling unit, the second throttling unit is serially connected between the first heat exchanging unit and the second heat exchanging unit, the first throttling unit is serially connected between the fifth heat exchanging unit and the first heat exchanging unit, and the first heat exchanging unit and the fifth heat exchanging unit are used to exchange heat with an environment respectively; and an energy storage apparatus which is provided with an energy storage material, wherein the second heat exchanging unit exchanges heat with the energy storage material.

The air conditioner provided in the above embodiment of the present invention is formed with the first medium circulating system; in a circulating loop of the first medium circulating system, after the first medium does work through a compressor, the first heat exchanging unit and the first throttling unit, the first medium releases a part of carried cold energy into the environment through the first heat exchanging unit, thus realizing room cooling; thereafter, the first medium is further cooled by the second throttling unit and provides the carried cold energy with much lower temperature to the energy storage material through the second heat exchanging unit, thus realizing the energy storage, so that the requirement for synchronously cooling a room and storing energy for the energy storage material can be met; moreover, in this way, the first medium can provide much lower evaporation temperature to the energy storage material, so that a utilization rate of the energy storage material is higher, and an energy storage process is more efficient; compared with a solution in the prior art for storing the cold energy first with the storage energy material and then cooling the room by using the cold energy stored by the energy storage material, cooling ways of the present structure for the environment are diversified, so that use functions and operation modes of the product are richer; and moreover, the present structure realizes an operation mode for synchronously cooling the room and storing the energy for the energy storage material, so that it is unnecessary to cool the environment based on the energy storage of the energy storage material, the use continuity is better, and the use requirements of users can be met.

Furthermore, the air conditioner in the above embodiment provided by the present invention may also have the following additional technical features.

In the above embodiment, the first medium circulating system further includes a third throttling unit, wherein a branch formed by the first throttling unit, the first heat exchanging unit and the second throttling unit in series connection is connected with the third throttling unit in parallel; and a first valve connected with the third throttling unit, the fifth heat exchanging unit and the first throttling unit, wherein the first valve has a first position and a second position; the first valve controls the fifth heat exchanging unit to be connected with the first throttling unit, and controls the fifth heat exchanging unit to be disconnected to the third throttling unit at the first position, and controls the fifth heat exchanging unit to be disconnected to the first throttling unit and controls the fifth heat exchanging unit to be connected to the third throttling unit at the second position.

In the above embodiment, the first medium circulating system further includes: a second valve; a branch formed by the first throttling unit and the first heat exchanging unit in series connection is connected with the second valve in parallel; the second valve has a first on position and a first off position; and the second valve enables the branch arranged in parallel with the second valve to be short-circuited at the first on position, and enables the branch arranged in parallel with the second valve to be connected at the first off position.

In the above embodiment, the first medium circulating system further includes: a second valve, wherein a branch formed by the first heat exchanging unit and the second throttling unit in series connection is connected with the second valve in parallel; the second valve has the first on position and the first off position; and the second valve enables the branch arranged in parallel with the second valve to be short-circuited at the first on position, and enables the branch arranged in parallel with the second valve to be connected at the first off position.

In the above embodiment, the first throttling unit is a capillary tube adapted to the first heat exchanging unit, and the second throttling unit is a capillary tube adapted to the second heat exchanging unit; or one or both of the first throttling unit and the second throttling unit are expansion valves with adjustable openings.

In the above embodiment, the third throttling unit is a capillary tube adapted to the second heat exchanging unit, or the third throttling unit is an expansion valve with an adjustable opening.

In the above embodiment, the second throttling unit is an expansion valve with an adjustable opening.

In the above embodiment, the first throttling unit is an expansion valve with an adjustable opening.

In any of the above embodiments, the first medium circulating system is formed with a first loop; the first heat exchanging unit, the second heat exchanging unit, the first throttling unit and the second throttling unit form a part of the first loop; wherein, the first loop is provided with the compressor and a reversing device; the compressor is provided with an air vent and a return air inlet; the reversing device is connected with the air vent, the return air inlet, the second heat exchanging unit and the fifth heat exchanging unit; the reversing device has a third position and a fourth position; the reversing device connects the air vent and the fifth heat exchanging unit, and connects the return air inlet and the second heat exchanging unit at the third position; and the reversing device connects the air vent and the second heat exchanging unit, and connects the return air inlet and the fifth heat exchanging unit at the fourth position.

In any of the above embodiments, the first medium circulating system further includes: a third valve; a branch formed by the second throttling unit and the second heat exchanging unit in series connection is connected with the third valve in parallel; the third valve has a second on position and a second off position; and the third valve enables the branch arranged in parallel with the third valve to be short-circuited at the second on position, and enables the branch arranged in parallel with the third valve to be connected at the second off position.

In any of the above embodiments, the air conditioner further includes a second medium circulating system which is formed with a second loop, and includes a third heat exchanging unit and a fourth heat exchanging unit formed in the second loop; and the third heat exchanging unit is used to exchange the heat with the environment, and the fourth heat exchanging unit exchanges the heat with the energy storage material.

In the above embodiment, the energy storage apparatus includes a container body; the energy storage material is accommodated in the container body, and at least one part of the second heat exchanging unit is located in the container body and contacts the energy storage material; and/or at least one part of the fourth heat exchanging unit is located in the container body and contacts the energy storage material.

In the above embodiment, a driving apparatus is arranged in the second loop, and the driving apparatus is configured to drive a second medium in the second loop.

In the above embodiment, the air conditioner further includes an electrical storage device; the electrical storage device is electrically connected with the driving apparatus and supplies power to the driving apparatus; and/or the electrical storage device is electrically connected with the compressor of the first medium circulating system and supplies power to the compressor of the first medium circulating system.

In the above embodiment, the first medium circulating system is provided with a first fan; and the first fan is used to drive airflow to exchange the heat with the first heat exchanging unit and the third heat exchanging unit.

In the above embodiment, the first heat exchanging unit and the third heat exchanging unit are arranged along a wind direction; wherein, and a surface temperature of one of the first heat exchanging unit and the third heat exchanging unit is higher than that of the other one, and the one of the first heat exchanging unit and the third heat exchanging unit with higher surface temperature is located at an air inlet side of the one with lower surface temperature.

In the above embodiment, the air conditioner further includes an electric heating apparatus; and the first fan is configured to drive airflow to exchange the heat with the electric heating apparatus, so that the electric heating apparatus supplies the heat to the environment.

In any of the above embodiments, the air conditioner further includes a shell; and the air conditioner is an integrated air conditioner, and the shell is formed as the shell of the integrated air conditioner.

The second aspect of the present invention provides a control method for the air conditioner conditioner as defined in claim 15, which includes the following steps.

Controlling the first medium circulating system to operate in a first preset mode according to a first mode indicated by a mode instruction, so that the air vent and the return air inlet of the compressor are connected through the fifth heat exchanging unit, the first throttling unit, the first heat exchanging unit, the second throttling unit and the second heat exchanging unit, and controlling the second medium circulating system to close; controlling the first medium circulating system to operate in a second preset mode according to a second mode indicated by the mode instruction, so that the air vent and the return air inlet of the compressor are connected through the fifth heat exchanging unit, the first throttling unit, the first heat exchanging unit, the second throttling unit and the second heat exchanging unit, and controlling the second medium circulating system to operate; controlling the first medium circulating system to operate in a third preset mode according to a third mode indicated by the mode instruction, so that the air vent and the return air inlet of the compressor are connected through the fifth heat exchanging unit, the first throttling unit, the first heat exchanging unit and the third valve, and controlling the second medium circulating system to operate; controlling the first medium circulating system to operate in a fourth preset mode according to a fourth mode indicated by the mode instruction, so that the air vent and the return air inlet of the compressor are connected through the fifth heat exchanging unit, the second valve, the second throttling unit and the second heat exchanging unit, and controlling the second medium circulating system to operate; controlling the first medium circulating system to operate in a fifth preset mode according to a fifth mode indicated by the mode instruction, so that the air vent and the return air inlet of the compressor are connected through the fifth heat exchanging unit, the first valve, the third throttling unit and the second heat exchanging unit, and controlling the second medium circulating system to close; controlling the first medium circulating system to operate in a sixth preset mode according to a sixth mode indicated by the mode instruction, so that the air vent and the return air inlet of the compressor are connected through the fifth heat exchanging unit, the second valve, the second throttling unit and the second heat exchanging unit, and controlling the second medium circulating system to close; controlling the first medium circulating system to close according to a seventh mode indicated by the mode instruction, and controlling the second medium circulating system to operate; controlling the first fan of the first medium circulating system to operate according to an eighth mode indicated by the mode instruction, and controlling the electric heating apparatus to operate, so that the first fan drives the airflow to exchange the heat with the electric heating apparatus, and controlling the second medium circulating system to close; controlling the first medium circulating system to operate in a ninth preset mode according to a ninth mode indicated by the mode instruction, so that the air vent and the return air inlet of the compressor are connected through the fifth heat exchanging unit, the first throttling unit, the first heat exchanging unit, the second throttling unit and the second heat exchanging unit, and controlling the second medium circulating system to operate, wherein in the ninth preset mode, the opening of the first throttling unit and the second throttling unit is greater than zero respectively, and the opening of the first throttling unit is smaller than the openings of the second throttling unit; and controlling the first medium circulating system to operate in a tenth preset mode according to a tenth mode indicated by the mode instruction, so that the air vent and the return air inlet of the compressor are connected through the fifth heat exchanging unit, the first throttling unit, the first heat exchanging unit, the second throttling unit and the second heat exchanging unit, and controlling the second medium circulating system to close, wherein in the tenth preset mode, the opening of the first throttling unit is a maximal threshold, and the opening of the second throttling unit is greater than zero and less than the maximal threshold.

By adopting the control method for the air conditioner provided by the above embodiment of the present invention, the air conditioner can be controlled to operate in at least ten modes, the operation modes of the air conditioner are richer, and the use requirements of the product can be better met.

More specifically, for example, according to the first mode indicated by the mode instruction, the air vent and the return air inlet of the compressor are controlled to be connected through the fifth heat exchanging unit, the first throttling unit, the first heat exchanging unit, the second throttling unit and the second heat exchanging unit, and the second medium circulating system is controlled to close. Specifically, for example, the driving apparatus is controlled to close, so that the circulation of the second medium in the second medium circulating system is stopped, thereby closing the second medium circulating system. In this way, the first medium is first evaporated to certain extent in the first heat exchanging unit, and then further evaporated in the second heat exchanging unit to realize weak cooling + ice storage, so that the temperature of cold wind provided to the environment is more moderate, the harsh cold feeling caused by the excessively low temperature may not be generated, and the comfortable use experience of the product can be improved.

According to the second mode indicated by the mode instruction, the air vent and the return air inlet of the compressor are controlled to be connected through the fifth heat exchanging unit, the first throttling unit, the first heat exchanging unit, the second throttling unit and the second heat exchanging unit, and the second medium circulating system is controlled to operate. Based on the operation state of the first medium circulating system in the "first mode", the driving apparatus is further controlled to work to enable the second medium circulating system to operate; in this way, the first medium is first evaporated to certain extent in the first heat exchanging unit and then further evaporated in the second heat exchanging unit; at the same time, the driving apparatus is controlled to start to allow the circulation of the second medium in the second medium circulating system, thus realizing the operation of the second medium circulating system; and the second medium absorbs the cold energy of the energy storage material and then releases the cold energy to the environment through the third heat exchanging unit, so that the first heat exchanging unit and the third heat exchanging unit cool the environment simultaneously, and the demand of the user for indoor cooling at a higher rate can be satisfied.

According to the third mode indicated by the mode instruction, the air vent and the return air inlet of the compressor are controlled to be connected through the fifth heat exchanging unit, the first throttling unit, the first heat exchanging unit and the third valve, and the second medium circulating system is controlled to operate. Specifically, for example, the first medium enters the first heat exchanging unit to be evaporated after being throttled by the first throttling unit so as to cool the environment, and the second heat exchanging unit stops cooling the energy storage material, so that the cold energy generated by the working of the first medium circulating system is mainly used to cool the environment; and at the same time, the second medium absorbs the cold energy of the energy storage material and then releases the cold energy to the environment through the third heat exchanging unit, so that the first heat exchanging unit and the third heat exchanging unit cool the environment simultaneously to realize strong cooling, and the demand of the user for indoor cooling at the higher rate can be satisfied.

According to the fourth mode indicated by the mode instruction, the air vent and the return air inlet of the compressor are controlled to be connected through the fifth heat exchanging unit, the second valve, the second throttling unit and the second heat exchanging unit, and the second medium circulating system is controlled to operate; specifically, for example, the first medium enters the second heat exchanging unit to be evaporated after being throttled by the second throttling unit so as to cool the energy storage material; at the same time, the driving apparatus is controlled to start to allow the circulation of the second medium in the second medium circulating system, thus realizing the operation of the second medium circulating system; and the second medium absorbs the cold energy of the energy storage material and then releases the cold energy to the environment through the third heat exchanging unit to realize strong cooling, so that the temperature of the cold wind provided to the environment is more moderate, the harsh cold feeling caused by the excessively low temperature may not be generated, and the comfortable use experience of the product can be improved.

According to the fifth mode indicated by the mode instruction, the air vent and the return air inlet of the compressor are controlled to be connected through the fifth heat exchanging unit, the first valve, the third throttling unit and the second heat exchanging unit, and the second medium circulating system is controlled to close. Specifically, for example, the first medium enters the second heat exchanging unit to be evaporated after being throttled by the third throttling unit so as to cool the energy storage material, and the first heat exchanging unit, the first throttling unit and the second throttling unit do not work, so that the cold energy generated by the working of the first medium circulating system is mainly used to cool the energy storage material; and at the same time, the driving apparatus is controlled to close so as to stop the circulation of the second medium in the second medium circulating system, thus closing the second medium circulating system, and realizing the ice storage only, so that when it is unnecessary to use the first heat exchanging unit to cool the environment, the unnecessary power consumption is avoided, and the energy conservation and emission reduction of the product can be realized.

According to the sixth mode indicated by the mode instruction, the air vent and the return air inlet of the compressor are controlled to be connected through the fifth heat exchanging unit, the second valve, the second throttling unit and the second heat exchanging unit, and the second medium circulating system is controlled to close. Specifically, for example, the first medium enters the second heat exchanging unit to be evaporated after being throttled by the second throttling unit so as to cool the energy storage material, and the first heat exchanging unit, and the second and the first throttling units do not work, so that the cold energy generated by the working of the first medium circulating system is mainly used to cool the energy storage material; at the same time, the driving apparatus is controlled to close to stop the circulation of the second medium in the second medium circulating system, thus closing the second medium circulating system, and realizing the ice storage only, so that when it is unnecessary to use the first heat exchanging unit to cool the environment, the unnecessary power consumption can be avoided, and the energy conservation and emission reduction of the product can be realized.

According to the seventh mode indicated by the mode instruction, the first medium circulating system is controlled to close, and the second medium circulating system is controlled to operate. Specifically, for example, the compressor is controlled to close so as to stop the circulation of the first medium in the first medium circulating system, thus closing the first medium circulating system; at the same time, the driving apparatus is controlled to open so as to allow the circulation of the second medium in the second medium circulating system, thus realizing the operation of the second medium circulating system; and the second medium absorbs the cold energy of the energy storage material and then releases the cold energy to environment through the third heat exchanging unit, thus realizing the environment cooling by the third heat exchanging unit, and realizing the cooling by melting the ice, so that the temperature of the cold wind provided to the environment is more moderate, the harsh cold feeling caused by the excessively low temperature may not be generated, and the comfortable use experience of the product can be improved.

According to the eighth mode indicated by the mode instruction, the first fan of the first medium circulating system is controlled to operate, and at the moment, because the first medium in the first medium circulating system does not need to circulate, the compressor may be controlled correspondingly to close in the mode; furthermore, the electric heating apparatus is controlled to operate, so that the first fan drives the airflow to exchange the heat with the electric heating apparatus; and the second medium circulating system is controlled to close, that is, the driving apparatus is controlled to close, so that the electric heating apparatus supplies heats the environment.

According to the ninth mode indicated by the mode instruction, the air vent and the return air inlet of the compressor are controlled to be connected through the fifth heat exchanging unit, the first throttling unit, the first heat exchanging unit, the second throttling unit and the second heat exchanging unit, and the second medium circulating system is controlled to operate. Wherein, in the ninth preset mode, the opening of the first throttling unit and the second throttling unit is greater than zero respectively; and the opening of the first throttling unit is smaller than the opening of the second throttling unit. Specifically, for example, the first medium is first evaporated to certain extent in the first heat exchanging unit and further evaporated in the second heat exchanging unit to realize weak cooling + ice storage, so that the temperature of the cold wind provided to the environment is more moderate, the harsh cold feeling caused by the excessively low temperature may not be generated, and the comfortable use experience of the product can be improved. At the same time, the opening of the first throttling unit is controlled to be smaller than the opening of the second throttling unit, so that the first medium is further throttled in the second throttling unit, and the throttling is more sufficient. The second medium circulating system operates, and the second medium absorbs the cold energy of the energy storage material and then releases the cold energy to the environment through the third heat exchanging unit, so that the first heat exchanging unit and the third heat exchanging unit cool the environment simultaneously, and the demand of the user for indoor cooling at the higher rate can be satisfied.

According to the tenth mode indicated by the mode instruction, the air vent and the return air inlet of the compressor are controlled to be connected through the fifth heat exchanging unit, the first throttling unit, the first heat exchanging unit, the second throttling unit and the second heat exchanging unit, and the second medium circulating system is controlled to close; wherein, and in the tenth preset mode, the opening of the first throttling unit is a maximum threshold, and the opening of the second throttling unit is greater than zero and less than the maximum threshold. The opening of the first throttling unit is the maximum threshold, and in this way, the first medium can flow to the first heat exchanging unit without being throttled when flowing through the first throttling unit, so that the first heat exchanging unit does not cool the environment; and then the first medium flows to the second throttling unit and is throttled fully by the second throttling unit so as to cool the energy storage material, thereby realizing the ice storage only. In this way, the switching of the air conditioner modes can be realized by only controlling and adjusting the opening of the first throttling unit and the second throttling unit, so that the number of parts of the product can be further reduced, the assembling steps of the product can be reduced, and the cost of the product can be reduced.

Additional aspects and advantages of the present invention may become apparent in the following description or may be known by the practice of the present invention.

### BRIEF DESCRIPTION OF THE DRAWINGS

Fig. 1 is a structural schematic diagram of an air conditioner according to an embodiment of the present invention;
Fig. 2 is a structural schematic diagram of the air conditioner according to an embodiment of the present invention;
Fig. 3 is a structural schematic diagram of the air conditioner according to an embodiment of the present invention;
Fig. 4 is a structural schematic diagram of the air conditioner according to an embodiment of the present invention;
Fig. 5 is a structural schematic diagram of the air conditioner according to an embodiment of the present invention;
Fig. 6 is a structural schematic diagram of the air conditioner according to an embodiment of the present invention;
Fig. 7 is a structural schematic diagram of the air conditioner according to an embodiment of the present invention;
Fig. 8 is a structural schematic diagram of the air conditioner according to an embodiment of the present invention;
Fig. 9 is a structural schematic diagram of the air conditioner according to an embodiment of the present invention;
Fig. 10 is a structural schematic diagram of the air conditioner according to an embodiment of the present invention;
Fig. 11 is a flow chart of a control method for the air conditioner according to an embodiment of the present invention;
Fig. 12 is a flow chart of the control method for the air conditioner according to an embodiment of the present invention;
Fig. 13 is a flow chart of the control method for the air conditioner according to an embodiment of the present invention;
Fig. 14 is a flow chart of the control method for the air conditioner according to an embodiment of the present invention;
Fig. 15 is a structural schematic diagram of an operation control apparatus which is not part of the present invention; and
Fig. 16 is a structural schematic diagram of the air conditioner according to an embodiment of the present invention.

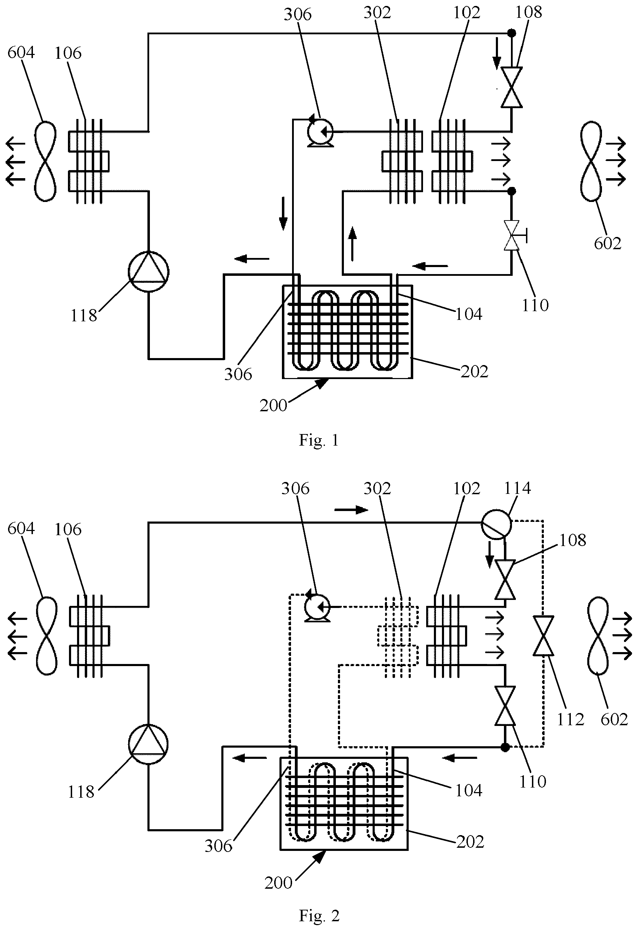

Wherein the correspondence between the reference numerals and the component names in Figs. 1 to 16 is:
102, first heat exchanging unit; 104, second heat exchanging unit; 106, fifth heat exchanging unit; 108, first throttling unit; 110, second throttling unit; 112, third throttling unit; 114, first valve; 116, second valve; 118, compressor; 120, reversing device; 122, third valve; 200, energy storage apparatus; 202, container body; 302, third heat exchanging unit; 304, fourth heat exchanging unit; 306, driving apparatus; 400, electrical storage device; 500, electric heating apparatus; 602, first fan; 604, second fan; 800, operation control apparatus; 802, processor; 804, storage; 900, shell; 910, chassis; 920, traveling apparatus; 930, cavity; 940, ventilation structure.

### DETAILED DESCRIPTION OF THE INVENTION

In order that the above objects, features, and advantages of the present invention may be more clearly understood, the present invention will be described in further detail with reference to the accompanying drawings and specific embodiments. It should be noted that the embodiments and features in the embodiments of the present invention may be combined with one another without conflict.

In the following description, many specific details are set forth in order to fully understand the present invention.

The scope of the present invention is solely limited by the appended claims.

An air conditioner according to some embodiments of the present invention is described below with reference to Fig. 1 to Fig. 10.

As shown in Fig. 1 to Fig. 10, an embodiment of a first aspect of the present invention provides an air conditioner, which includes a first medium circulating system and an energy storage apparatus 200.

Specifically, as shown in Fig. 1, the first medium circulating system includes a first heat exchanging unit 102, a second heat exchanging unit 104, a fifth heat exchanging unit 106, a first throttling unit 108 and a second throttling unit 110; the first heat exchanging unit 102 is serially connected between the first throttling unit 108 and the second throttling unit 110; the second throttling unit 110 is serially connected between the first heat exchanging unit 102 and the second heat exchanging unit 104; the first throttling unit 108 is serially connected between the fifth heat exchanging unit 106 and the first heat exchanging unit 102; and the first heat exchanging unit 102 and the fifth heat exchanging unit 106 are used to exchange heat with an environment respectively.

The energy storage apparatus 200 is provided with an energy storage material, and the second heat exchanging unit 104 exchanges the heat with the energy storage material.

Specifically, the first medium circulating system is used for the circulation of a first medium; the first medium, for example, is R290 (propane) refrigerant; the first heat exchanging unit 102, the second heat exchanging unit 104 and the fifth heat exchanging unit 106, for example, are finned tube heat exchangers; of course, the first heat exchanging unit 102, the second heat exchanging unit 104 and the fifth heat exchanging unit 106 may also be set as parallel flow heat exchangers and other heat exchangers; the heat exchanger, for example, is provided with fins, which may improve the heat exchanging efficiency; of course, the heat exchanger with no fin may also be adopted; and the first throttling unit 108 and the second throttling unit 110 are the capillary tubes, for example, and may also adopt electronic expansion valves or thermostatic expansion valves of course. The energy storage material is ice, for example.

Of course, the energy storage material has various choices. Besides the ice, those skilled in the art may select other types of phase-changing materials as the energy storage material, which are not listed one by one here, but shall fall within the protection scope of the present invention without deviating from the design concept of the present invention.

As shown in Fig. 1, in the present embodiment, the first medium circulating system further includes a compressor 118 that is serially connected between the second heat exchanging unit 104 and the fifth heat exchanging unit 106 and compresses refrigerant from the second heat exchanging unit 104 and delivers the compressed refrigerant to a fifth heat exchanging unit 106; the first throttling unit 108 is connected with the fifth heat exchanging unit 106 and the first heat exchanging unit 102 and configured to throttle the refrigerant from the fifth heat exchanging unit 106 and deliver the throttled refrigerant to the first heat exchanging unit 102; the first medium exchanges the heat with the environment through the first heat exchanging unit 102 and then flows into the second throttling unit 110; the second throttling unit 110 further throttles the refrigerant and delivers the throttled refrigerant to the second heat exchanging unit 104; and the first medium cools the energy storage material through the second heat exchanging unit 104, so that the energy storage material stores the energy.

In this way, the first heat exchanging unit 102, the second heat exchanging unit 104, the fifth heat exchanging unit 106, the compressor 118, the first throttling unit 108 and the second throttling unit 110 are connected in series in a same loop; in an embodiment, the first medium circulating system is further provided with a second fan 604; the second fan 604 is configured to drive airflow to exchange the heat with the fifth heat exchanging unit 106; under a refrigerating condition, the first medium circulating system operates; specifically, the compressor 118 compresses the refrigerant, and then the high-temperature high-pressure refrigerant formed by compression is discharged into the fifth heat exchanging unit 106; the fifth heat exchanging unit 106 is used as a condenser for the refrigerant to exchange the heat with the airflow, so that after the refrigerant is cooled, the normal-temperature high-pressure refrigerant formed by cooling is discharged into the first throttling unit 108; the normal-temperature high-pressure refrigerant is throttled by the first throttling unit 108 and then discharged into the first heat exchanging unit 102; the first heat exchanging unit 102 is used as an evaporator for the refrigerant to absorb the heat, thus cooling the environment; the first medium, which exchanges the heat with the environment, in the first heat exchanging unit 102 continues to flow into the second throttling unit 110, and is discharged into the second heat exchanging unit 104 after being throttled by the second throttling unit 110; the second heat exchanging unit 104 is used as the evaporator to cool the energy storage material in the energy storage apparatus 200, so that the energy storage material stores the energy; and in this way, the first medium circulating system not only can cool the environment through the first heat exchanging unit 102 after twice throttling treatment, but also can realize the energy storage of the energy storage apparatus 200.

The air conditioner provided by the above embodiment of the present invention is formed with the first medium circulating system; in a circulating loop of the first medium circulating system, after the first medium does work through the compressor 118, the first heat exchanging unit 102 and the first throttling unit 108, the first medium releases a part of carried cold energy into the environment through the first heat exchanging unit 102 to realize room cooling; thereafter, the first medium is cooled by the second throttling unit 110 and provides the carried cold energy to the energy storage material through the second heat exchanging unit 104 to realize the energy storage, so that the synchronous requirement for room cooling and energy storage of the energy storage material can be met; moreover, in this way, the first medium can provide much lower evaporation temperature to the energy storage material, so that a utilization rate of the energy storage material is higher, and an energy storage process is more efficient; compared with a solution in the prior art for storing the cold energy first with the storage energy material and then cooling the room by using the cold energy stored by the energy storage material, cooling ways of the present structure for the environment are diversified, so that application functions and operation modes of products are richer; and moreover, the present structure realizes an operation mode of synchronously cooling a room and storing the energy for the energy storage material, so that it is unnecessary to cool the environment based on the energy storage of the energy storage material, the use continuity is better, and the use requirements of the users can be met.

### Embodiment 1

As shown in Fig. 2, besides the features of the above embodiment, the embodiment further defines: the first medium circulating system also includes a third throttling unit 112 and a first valve 114. Specifically, the third throttling unit 112 is a capillary tube, for example, and may also adopt an electronic expansion valve or a thermostatic expansion valve, of course; the first valve 114 may adopt a three-way valve; a branch formed by the first throttling unit 108, the first heat exchanging unit 102 and the second throttling unit 110 in series connection is connected with the third throttling unit 112 in parallel; wherein the fifth heat exchanging unit 106 is communicated with an inlet of the first valve 114; the first throttling unit 108 and the third throttling unit 112 are correspondingly communicated with two outlets of the first valve 114 one by one; the first valve 114 has a first position and a second position, and the first valve 114 controls the fifth heat exchanging unit 106 to be connected to the first throttling unit 108, and controls the fifth heat exchanging unit 106 to be disconnected to the third throttling unit 112 at the first position, controls the fifth heat exchanging unit 106 to be disconnected to the first throttling unit 108 and controls the fifth heat exchanging unit 106 to be connected to the third throttling unit 112 at the second position. A branch formed by the first throttling unit 108, the first heat exchanging unit 102 and the second throttling unit 110 in series connection is connected with the third throttling unit 112 in parallel; the first valve 114 is used to alternately control the fifth heat exchanging unit 106 to be connected with one of the two parallel branches; in this way, as shown in Fig. 1, when the first valve 114 controls the fifth heat exchanging unit 106 to be connected with the first throttling unit 108, the first heat exchanging unit 102 and the second throttling unit 110, so that the air conditioner is switched to an operation mode of a "first mode", and at the time, the second heat exchanging unit 104 cools the energy storage material for energy storage; and at the same time, the first heat exchanging unit 102 cools the environment, thus forming weak cooling + ice storage.

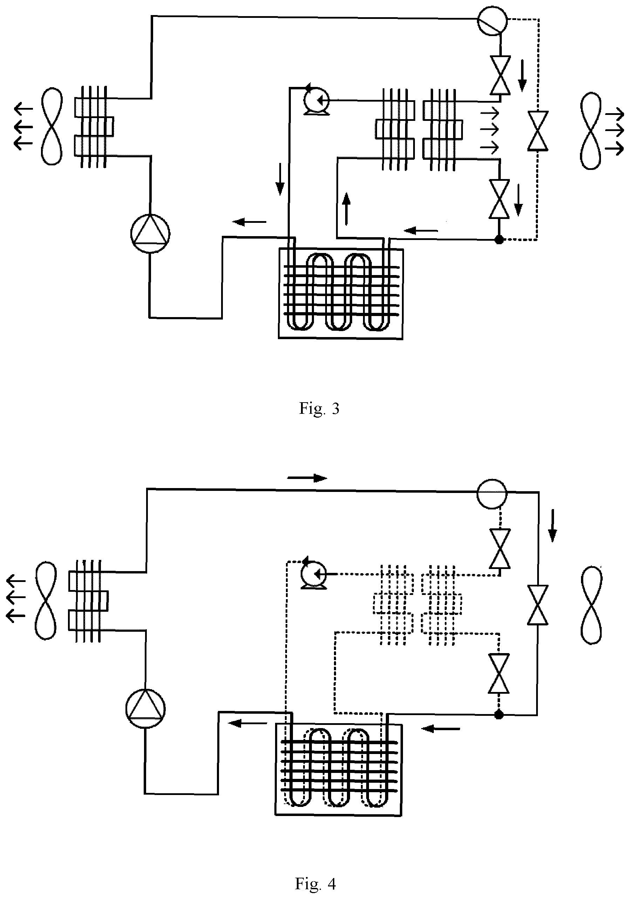

As shown in Fig. 4, when the first valve 114 controls the fifth heat exchanging unit 106 to be connected with the third throttling unit 112, the air conditioner is switched to operate in a "fifth mode", and at the moment, the first medium enters the second heat exchanging unit 104 to be evaporated after being throttled by the third throttling unit 112 to cool the energy storage material; and the first throttling unit 108, the first heat exchanging unit 102 and the second throttling unit 110 do not work, thereby forming ice storage only. That is, the first medium circulating loop stops cooling the environment; and in this way, the first medium circulating system mainly does work on the energy storage material, so that when it is unnecessary to use the first heat exchanging unit 102 to cool the environment, the unnecessary power consumption can be avoided, the energy conservation and emission reduction of the product can be realized, functions and operation modes of the product can be further enriched, and the use requirements of the product can be better met.

### Embodiment 2

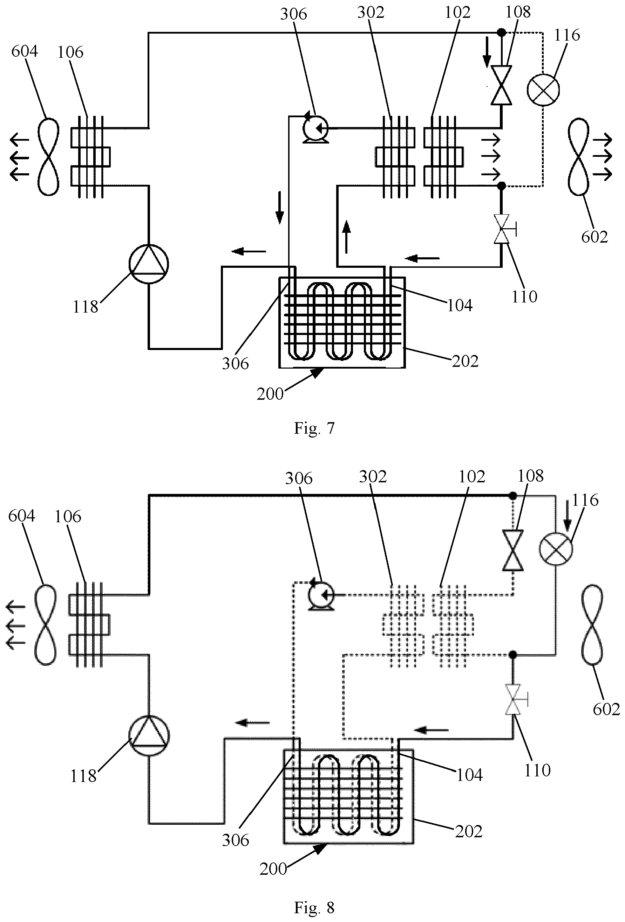

The present embodiment differs from any of the above embodiments in that the first medium circulating system further includes a second valve 116. Specifically, the second valve 116 may adopt a switching valve; a branch formed by the first throttling unit 108 and the first heat exchanging unit 102 in series connection is connected with the second valve 116 in parallel; the second valve 116 has a first on position and a first off position; the second valve 116 enables the branch arranged in parallel with the second valve to be short-circuited at the first on position; and the second throttling unit 110 is the expansion valve with the adjustable opening, for example. At the first off position, the branch arranged in parallel with the second valve is enabled to be connected. The branch formed by the first throttling unit 108 and the first heat exchanging unit 102 in series connection is connected with the second valve 116 in parallel; the second valve 116 is used to alternately control the branch formed by the first throttling unit 108 and the first heat exchanging unit 102 in series connection to be connected or short-circuited; in this way, the switching of the air conditioner modes can be realized by only one second valve 116, which is conducive to reducing the number of components of the product, reducing the assembling steps of the product, and reducing the cost of the product. Specifically, as shown in Fig. 7, the second valve 116 controls the branch formed by the first throttling unit 108 and the first heat exchanging unit 102 in series connection to be connected, so that the air conditioner is switched to the operation mode of the "first mode", and at the moment, the second heat exchanging unit 104 cools the energy storage material for energy storage; and at the same time, the first heat exchanging unit 102 cools the environment.

As shown in Fig. 8, when the second valve 116 controls the branch formed by the first throttling unit 108 and the first heat exchanging unit 102 in series connection to be short-circuited, the air conditioner is switched to operate in a "fifth mode"; at the moment, the first medium enters the second heat exchanging unit 104 to be evaporated after being throttled by the second throttling unit 110 so as to cool the energy storage material, and the first throttling unit 108 and the first heat exchanging unit 102 do not work; and that is, the first medium circulating loop stops cooling the environment, in this way, the first medium circulating system mainly does work on the energy storage material, so that when it is unnecessary to use the first heat exchanging unit 102 to cool the environment, the unnecessary power consumption can be avoided, the energy conservation and emission reduction of the product can be realized, the functions and operation modes of the product can be further enriched, and the use requirements of the product can be better met.

### Embodiment 3

The present embodiment differs from Embodiment 2 in that the branch formed by the first heat exchanging unit 102 and the second throttling unit 110 in series connection is connected with the second valve 116 in parallel; and the second valve 116 has the first on position and the first off position, and the second valve 116 enables the branch arranged in parallel with the second valve to be short-circuited at the first on position, and enables the branch arranged in parallel with the second valve to be connected at the first off position. The first throttling unit 108 is an expansion valve with an adjustable opening. The branch formed by the first heat exchanging unit 102 and the second throttling unit 110 in series connection is connected with the second valve 116 in parallel; the second valve 116 can be used to alternately control the branch formed by the first heat exchanging unit 102 and the second throttling unit 110 in series connection to be connected or short-circuited; in this way, the switching of the air conditioner modes can be realized by only one second valve 116, which is conducive to reducing the number of components of the product, reducing the assembling steps of the product, and reducing the cost of the product. Specifically, the second valve 116 controls the branch formed by the first heat exchanging unit 102 and the second throttling unit 110 in series connection to be connected, so that the air conditioner is switched to operate in the "first mode"; and at the moment, the second heat exchanging unit 104 cools the energy storage material for energy storage, and the first heat exchanging unit 102 cools the environment at the same time.

When the second valve 116 controls the branch formed by the first heat exchanging unit 102 and the second throttling unit 110 in series connection to be short-circuited, the air conditioner is switched to operate in the "fifth mode"; at the moment, the first medium enters the second heat exchanging unit 104 to be evaporated after being throttled by the first throttling unit 108 so as to cool the energy storage material, and the first heat exchanging unit 102 and the second throttling unit 110 do not work; and that is, the first medium circulating loop stops cooling the environment, and in this way, the first medium circulating system mainly does work on the energy storage material, so that when it is unnecessary to use the first heat exchanging unit 102 to cool the environment, the unnecessary power consumption can be avoided, the energy conservation and emission reduction of the product can be realized, the functions and operation modes of the product can be further enriched, and the use requirements of the product can be better met.

### Embodiment 4

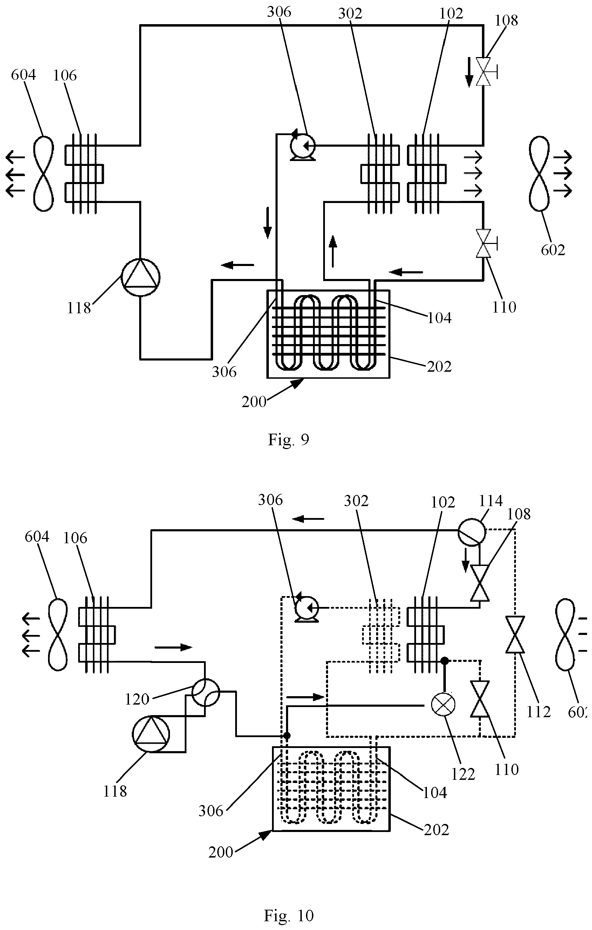

The present embodiment differs from any of the above embodiments in that as shown in Fig. 10, the first medium circulating system also includes a compressor 118 and a reversing device 120; the first heat exchanging unit 102, the second heat exchanging unit 104, the first throttling unit 108, the second throttling unit 110, the compressor 118 and the reversing device 120 form a first loop; the compressor 118 is provided with an air vent and a return air inlet; the reversing device 120 is connected with the air vent, the return air inlet, the second heat exchanging unit 104 and the fifth heat exchanging unit 106; the reversing device 120 has a third position and a fourth position; the reversing device 120 enables the air vent to be connected with the fifth heat exchanging unit 106 and enables the return air inlet to be connected with the second heat exchanging unit 104 at the third position; and the reversing device 120 enables the air vent to be connected with the second heat exchanging unit 104 and enables the return air inlet to be connected with the fifth heat exchanging unit 106 at the fourth position. The first heat exchanging unit 102, the second heat exchanging unit 104, the first throttling unit 108, the second throttling unit 110 and the compressor 118 are formed in the first loop; the reversing device 120 is used to control a flowing direction of the first medium in the first loop, and the switching of evaporation or condensation between the first heat exchanging unit 102 and the fifth heat exchanging unit 106 in the first loop can be realized, so that the switching of the first heat exchanging unit 102 for cooling or heating the environment can be realized; and the heating can be further realized by the first medium circulating system, so that the operation modes of the product can be further enriched, and the use functions of the product can be further enriched.

### Embodiment 5

The present embodiment differs from any of the above embodiments in that as shown in Fig. 10, the first medium circulating system further includes a third valve 122; a branch formed by the second throttling unit 110 and the second heat exchanging unit 104 in series connection is connected with the third valve 122 in parallel; the third valve 122 has a second on position and a second off position; the third valve 122 enables the branch arranged in parallel with the third valve to be short-circuited at the second on position, and enables the branch arranged in parallel with the third valve to be connected at the second off position. In this way, the switching of the air conditioner modes can be realized by only one third valve 122, which is conducive to reducing the number of components of the product, reducing the assembling steps of the product and reducing the cost of the product. Specifically, the third valve 122 controls the branch formed by the second throttling unit 110 and the second heat exchanging unit 104 in series connection to be connected, so that the air conditioner is switched to operate in the "first mode"; and at the moment, the second heat exchanging unit 104 cools the energy storage material for energy storage, and the first heat exchanging unit 102 cools the environment at the same time.

When the third valve 122 controls the branch formed by the second throttling unit 110 and the second heat exchanging unit 104 in series connection to be short-circuited; at the moment, the first medium enters the first heat exchanging unit 102 to be evaporated after being throttled by the first throttling unit 108 so as to cool the environment, and the second throttling unit 110 and the second heat exchanging unit 104 do not work; that is, the first medium circulating loop stops cooling the energy storage material; in this way, the first medium circulating system mainly does work on the environment, so that when it is unnecessary to use the second heat exchanging unit 104 to cool the energy storage material, the unnecessary power consumption can be avoided, the energy conservation and emission reduction of the product can be realized, the functions and operation modes of the product can be further enriched, and the use requirements of the product can be better met.

By combining the present embodiment and Embodiment 4, the reversing device 120 controls the flowing direction of the first medium in the first loop, so that the first heat exchanging unit 102 is used as the condenser to heat the environment; at the same time, the second throttling unit 110 and the second heat exchanging unit 104 are short-circuited through the third valve 122, so that the second throttling unit 110 and the second heat exchanging unit 104 do not work, and the energy storage apparatus 200 does not work under a heating condition of the air conditioner.

### Embodiment 6

As shown in Fig. 1, besides the features of any of the above embodiments, the present embodiment further defines: the air conditioner further includes a second medium circulating system used for the circulation of a second medium; the second medium is a glycol aqueous solution serving as secondary refrigerant; the second medium circulating system includes a third heat exchanging unit 302 and a fourth heat exchanging unit 304; wherein the third heat exchanging unit 302 and the fourth heat exchanging unit 304 are connected in series to form a second loop; and the third heat exchanging unit 302 is used to exchange the heat with the environment, and the fourth heat exchanging unit 304 exchanges the heat with the energy storage material. In this way, the energy storage material after storing the energy may release the cold energy into the environment to cool the environment through the third heat exchanging unit 302, so that the air conditioner is switched to operate in a "seventh mode" to realize the cooling by melting the ice; moreover, according to the specific requirement, the first heat exchanging unit 102 may also be connected with the first throttling unit 108 and the third heat exchanging unit 302, and the second medium circulating system is in an operation state, so that the air conditioner is switched to operate in a "second mode"; and the cold energy supplied to the energy storage material is further delivered by the second medium to the third heat exchanging unit 302 and to be released into the environment, and the first heat exchanging unit 102 and the third heat exchanging unit 302 cool the environment simultaneously, thereby realizing the strong cooling.

Further, the second loop is provided with a driving apparatus 306, and the driving apparatus 306 is configured to drive the second medium in the second loop. For example, the driving apparatus 306 is a water pump, and the water pump is arranged between the third heat exchanging unit 302 and the fourth heat exchanging unit 304 and communicated with the third heat exchanging unit 302 and the fourth heat exchanging unit 304; the driving apparatus 306 drives the second medium in the second loop to flow, so that the second medium cools the environment through the third heat exchanging unit 302 and then can be efficiently returned into the fourth heat exchanging unit 304 to absorb the cold energy from the energy storage material; and in this way, the cooling continuity and uniformity of the third heat exchanging unit 302 are better, thereby improving the comfortable use experience of the product.

For example, the product is required to operate in the "seventh mode"; specifically, for example, as shown in Fig. 4, after certain energy is stored in the energy storage material, the first medium circulating system stops operating, the second medium circulating system operates, if the driving apparatus 306 is used to drive the second medium in the second loop to flow, the cold energy of the energy storage material is provided to the second medium through the fourth heat exchanging unit 304; and then the second medium enters the third heat exchanging unit 302, and the cold energy is released into the environment through the third heat exchanging unit 302 so as to realize the cooling; wherein and a cooling source is from the energy storage material.

In any of the above embodiments, the energy storage apparatus 200 includes a container body 202; the energy storage material is accommodated in the container body 202; for example, the container body 202 is a water tank; the energy storage material is stored in the water tank; and at least one part of the second heat exchanging unit 104 is located in the container body 202 and contacts the energy storage material. In this way, the second heat exchanging unit 104 exchanges the heat with the energy storage material more efficiently, thereby reducing the heat loss, and improving the energy efficiency of the product.

In any of the above embodiments, at least one part of the fourth heat exchanging unit 304 is located in the container body 202 and contacts the energy storage material. In this way, the fourth heat exchanging unit 304 exchanges the heat with the energy storage material more efficiently, thereby reducing the heat loss, and improving the energy efficiency of the product.

For example, the second heat exchanging unit 104 and the fourth heat exchanging unit 304 are finned tube heat exchangers with two flow paths.

For example, a thermal insulation structure (specifically, for example, the thermal insulation structure may be thermal insulation cotton or a thermal insulation coating attached to an outer surface of the container body 202) for preserving the heat of the container body 202 is attached to the outside of the container body 202. In this way, the thermal insulation is performed on the energy storage material in the container body 202, the unnecessary heat loss of the energy storage material is reduced, and the energy efficiency of the product is improved.

In any of the above embodiments, the air conditioner further includes an electrical storage device 400, and the electrical storage device 400 is electrically connected with the driving apparatus 306 and supplies power to the driving apparatus 306. In this way, the unplugged use of the product in one or more modes can be realized, the position limitation of a power supply wire is broken through, and the use experience of the product is improved.

For example, the electrical storage device 400 is electrically connected with the compressor 118 of the first medium circulating system and supplies power to the compressor 118 of the first medium circulating system. For example, the electrical storage device 400 includes a storage battery, and the storage battery is electrically connected with the compressor 118 so as to start the compressor 118. In this way, the unplugged use of the product in one or more modes can be realized, the position limitation of a power supply wire is broken through, and the use experience of the product is improved.

In any of the above embodiments, the air conditioner also includes a first fan 602, and the first fan 602 drives airflow to exchange the heat with the first heat exchanging unit 102 and the third heat exchanging unit 302. In this way, an assembling structure of the product is better simplified, and the cost and operation energy consumption of the product can be reduced.

Further, the first heat exchanging unit 102 and the third heat exchanging unit 302 are arranged along a wind direction; wherein and a surface temperature of one of the first heat exchanging unit 102 and the third heat exchanging unit 302 is higher than that of the other one, and the one of the first heat exchanging unit 102 and the third heat exchanging unit 302 with higher surface temperature is located at an air inlet side of the one with lower surface temperature. The one of the first heat exchanging unit 102 and the third heat exchanging unit 302 with higher surface temperature is located at the air inlet side of the one with lower surface temperature, which is described by taking cooling as an example; in a case where an evaporation temperature of the first heat exchanging unit 102 is lower than the third heat exchanging unit 302, along a flowing direction of the airflow driven by the first fan 602, the third heat exchanging unit 302 is located at an upstream side of the first heat exchanging unit 102, so that when the evaporation occurs simultaneously in the third heat exchanging unit 302 and the first heat exchanging unit 102, the airflow successively passes through the third heat exchanging unit 302 and the first heat exchanging unit 102 to form two-level heat exchange, which can realize much lower outlet air temperature, thereby further enlarging a temperature adjustable range for cooling the environment, further enriching the use functions of the product, and better meeting the use requirements of the user. Of course, cooling scenes can be fully understood by those skilled in the art in conjunction with the above demonstration process, which are not repeated here.

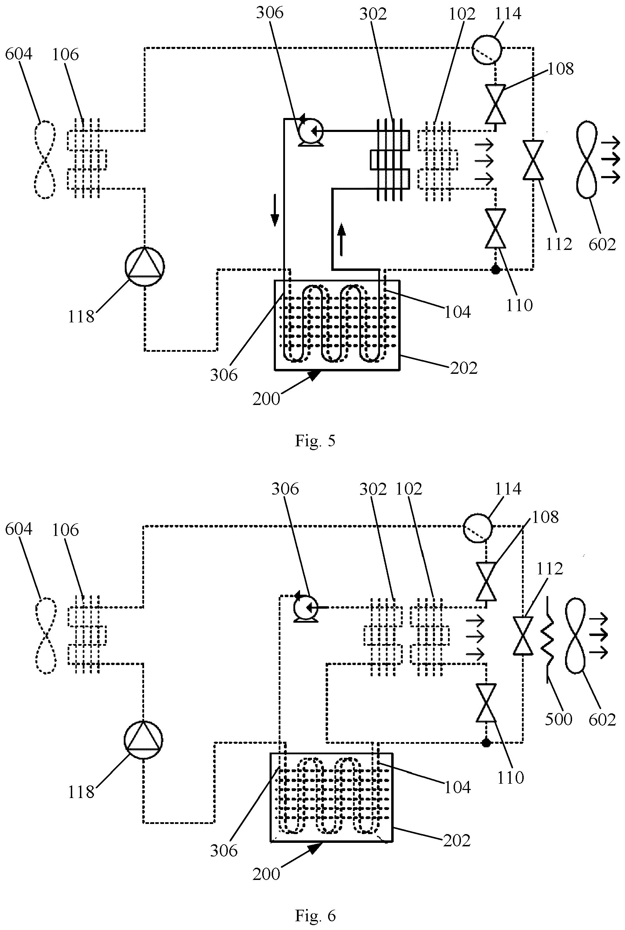

In any of the above embodiments, as shown in Fig. 5, the air conditioner further includes an electric heating apparatus 500, and the first fan 602 is configured to drive the airflow to exchange the heat with the electric heating apparatus 500, so that the electric heating apparatus 500 heats the environment. The first fan 602 drives the airflow to exchange the heat with the electric heating apparatus 500, so that the heated airflow heats the environment, thereby further enriching the heating form of the product, and enriching the functions of the product.

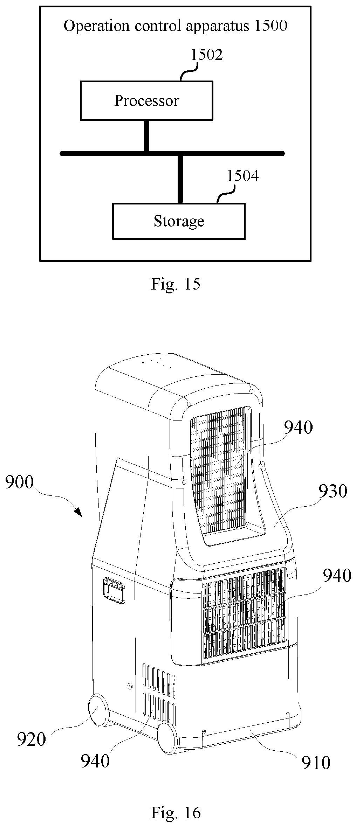

In any of the above embodiments, as shown in Fig. 16, the air conditioner also includes a shell 900; and the air conditioner is an integrated air conditioner, and the shell 900 is formed as the shell 900 of the integrated air conditioner. The air conditioner is set as the integrated air conditioner, so that components such as the first medium circulating system are accommodated in the shell 900 of the integrated air conditioner to form an integrated structure, which is more convenient for the random movement of the product, thereby further improving the use flexibility of the product.

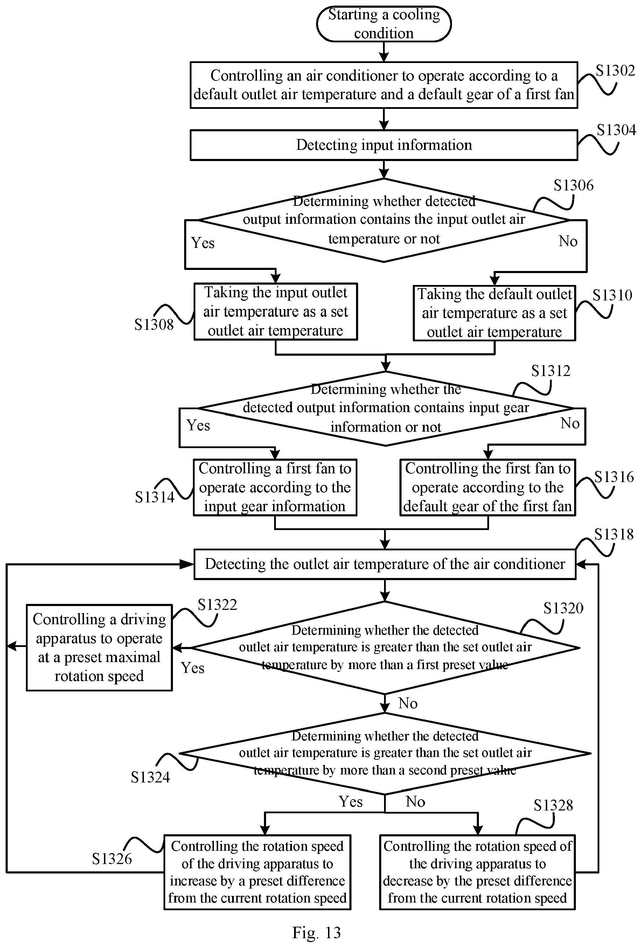

More specifically, as shown in Fig. 13, the shell 900 forms a cavity 930, and a chassis 910 is also formed below the cavity 930 of the shell 900; the cavity 930 and the chassis 910 are enclosed to form an accommodating space; the components of the air conditioner such as the first medium circulating system and the second medium circulating system are accommodated in the accommodating space; the chassis 910 is provided with a traveling apparatus 920, which is convenient for the movement of the air conditioner; and for example, the traveling apparatus 920 may be specifically a roller as shown in Fig. 13, for example. Of course, the traveling apparatus may also be a universal wheel, a crawler attachment, etc. It may be understood that the shell 900 is also provided with one or more ventilation structures 940 suitable for the shell 900 to absorb or discharge the air; and the ventilation structure 940 may be an air hole or a grid structure, etc.

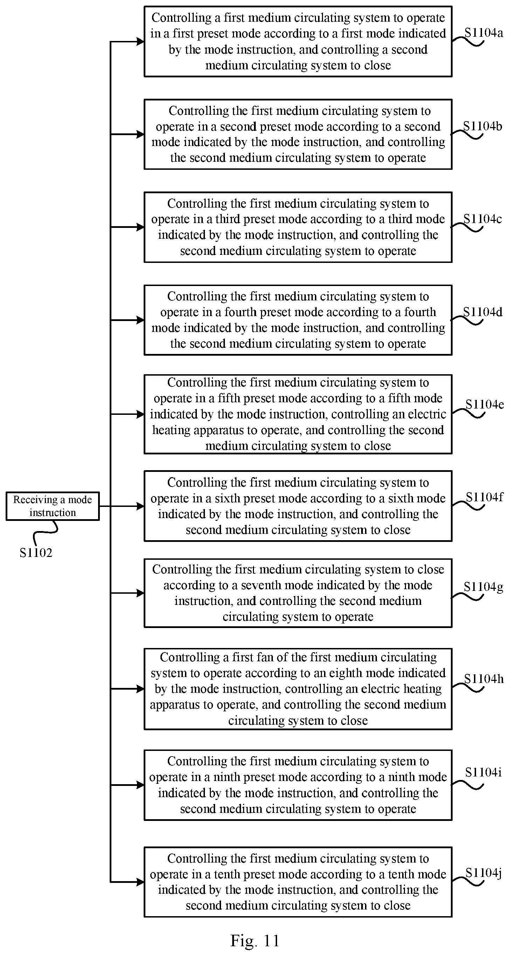

As shown in Fig. 11, an embodiment of a second aspect of the present invention provides a control method for the air conditioner of any of the above embodiments, which includes the following steps:
Step 1102: a mode instruction is received;
Step 1104: a mode indicated by the received mode instruction is determined, and the air conditioner is controlled to operate according to the mode indicated by the mode instruction.

Wherein the step 1104 specifically includes the following steps:
Step 1104a: according to a first mode indicated by the mode instruction, a first medium circulating system is controlled to operate in a first preset mode, and a second medium circulating system is controlled to close;
Step 1104b: according to a second mode indicated by the mode instruction, the first medium circulating system is controlled to operate in a second preset mode, and the second medium circulating system is controlled to operate;
Step 1104c: according to a third mode indicated by the mode instruction, the first medium circulating system is controlled to operate in a third preset mode, and the second medium circulating system is controlled to operate;
Step 1104d: according to a fourth mode indicated by the mode instruction, the first medium circulating system is controlled to operate in a fourth preset mode, and the second medium circulating system is controlled to operate;
Step 1104e: according to a fifth mode indicated by the mode instruction, the first medium circulating system is controlled to operate in a fifth preset mode, and the second medium circulating system is controlled to close;
Step 1104f: according to a sixth mode indicated by the mode instruction, the first medium circulating system is controlled to operate in a sixth preset mode, and the second medium circulating system is controlled to close;
Step 1104g: according to a seventh mode indicated by the mode instruction, the first medium circulating system is controlled to close, and the second medium circulating system is controlled to operate;
Step 1104h: according to an eighth mode indicated by the mode instruction, a first fan 602 of the first medium circulating system is controlled to operate, an electric heating apparatus 500 is controlled to operate, and the second medium circulating system is controlled to close;
Step 1104i: according to a ninth mode indicated by the mode instruction, the first medium circulating system is controlled to operate in a ninth preset mode, and the second medium circulating system is controlled to operate;
Step 1104j: according to a tenth mode indicated by the mode instruction, the first medium circulating system is controlled to operate in a tenth preset mode, and the second medium circulating system is controlled to close.

By adopting the control method for the air conditioner provided by the above embodiments of the present invention, the air conditioner can be controlled to operate in at least ten modes, so that the operation modes of the air conditioner are richer, and the use requirements of product can be better met.

The control method for the air conditioner in each working mode is described in detail below.

In the step 1104a, the first medium circulating system is controlled to operate in the first preset mode according to the first mode indicated by the mode instruction, so that an air vent and a return air inlet of a compressor 118 are connected through a fifth heat exchanging unit 106, a first throttling unit 108, a first heat exchanging unit 102, a second throttling unit 110 and a second heat exchanging unit 104, and the second medium circulating system is controlled to close.

Specifically, for example, the driving apparatus 306 is controlled to close so as to stop the circulation of the second medium in the second medium circulating system, thereby closing the second medium circulating system. In this way, the first medium is first evaporated to certain extent in the first heat exchanging unit 102, and then further evaporated in the second heat exchanging unit 104, so that the temperature of the cold wind provided to the environment is more moderate, the harsh cold feeling caused by the excessively low temperature may not be generated, and the comfortable use experience of the product can be improved.

Specifically, as shown in Fig. 2, in the "first mode", the first medium circulating system works, the compressor 118 is started, the compressor 118 compresses the first medium, and then the high-temperature high-pressure first medium formed by compression is discharged into the fifth heat exchanging unit 106; the fifth heat exchanging unit 106 is used as a condenser for the first medium to exchange the heat with the airflow to cool the first medium, and then the gaseous first medium with higher temperature is converted into a liquid state to flow through the first valve 114 (three-way valve); in this mode, the first valve 114 is connected with the first throttling unit 108; the first medium that is slightly throttled by the first throttling unit 108 is evaporated at a lower temperature in the first heat exchanging unit 102 to absorb the heat; the first heat exchanging unit 102 is used as an evaporator to supply the cold energy to the outside through the first fan 602; then the first medium flows into the second heat exchanging unit 104 in the container body 202 after being further throttled by the second throttling unit 110 so as to be evaporated at a much lower temperature to absorb the heat of the container body 202 for making ice; the evaporated first medium enters the compressor 118 in a gaseous state to complete the circulation of the refrigerant; and the driving apparatus 306 (such as the water pump) is not started, and the second medium circulating system does not work.

When all the water in the container body 202 is converted into ice, the driving apparatus 306 shall be started; the working mode of the air conditioner is switched to the "third mode" or the seventh mode so as to prevent the temperature of the ice in the container body 202 from being lower than a freezing point of the second medium under the continuous heat absorption of the second heat exchanging unit 104, and make the second medium frozen and hinder the circulation of the second medium.

In the step 1104b, as shown in Fig. 3, according to the second mode indicated by the mode instruction, the first medium circulating system is controlled to operate in the second preset mode, so that the air vent and the return air inlet of the compressor 118 are connected through the fifth heat exchanging unit 106, the first throttling unit 108, the first heat exchanging unit 102, the second throttling unit 110 and the second heat exchanging unit 104, and the second medium circulating system is controlled to operate.

Specifically, for example, based on the operation state of the first medium circulating system in the "first mode", the driving apparatus 306 is further controlled to work so as to enable the second medium circulating system to operate; in this way, the first medium is first evaporated to certain extent in the first heat exchanging unit 102 and then further evaporated in the second heat exchanging unit 104; at the same time, the driving apparatus 306 is controlled to start to allow the circulation of the second medium in the second medium circulating system so as to realize the operation of the second medium circulating system; and the second medium absorbs the cold energy of the energy storage material and then releases the cold energy to the environment through the third heat exchanging unit 302, so that the first heat exchanging unit 102 and the third heat exchanging unit 302 cool the environment simultaneously to realize the strong cooling, and the demand of the user for indoor cooling at a higher rate can be satisfied.

For example, as shown in Fig. 3, wherein in the second preset mode, an operation process of the first medium circulating system is the same as the operation process of the first medium circulating system in the step 1104a, which is not repeated here.

Moreover, the second medium circulating system works, the driving apparatus 306 is started, and the circulation of the second medium and the circulation of the first medium are carried out at the same time. The second medium with higher temperature enters the fourth heat exchanging unit 304 in the container body 202 through the driving apparatus 306, exchanges heat with the energy storage material in the container body 202 to be cooled, flows through the third heat exchanging unit 302, and cools the environment through the first fan 602.

Because the air of the first fan 602 may flow through the third heat exchanging unit 302 and the first heat exchanging unit 102 successively, the air temperature is lower, and the cold energy supplied to the outside can be increased under the same air volume. According to the power of the driving apparatus 306, the thawing power of the second medium in the container body 202 may be greater than the refrigerating power of the second heat exchanging unit 104; in this circumstance, a ratio of ice to water in the container body 202 may decrease gradually; with the melting of the ice, the cooling power of the fourth heat exchanging unit 304 decreases gradually; after the ice is molten completely, the cooling effect of the fourth heat exchanging unit 304 to the outside disappears; and at this time, the driving apparatus 306 shall be closed, and the operation mode shall be switched to the first mode or the fifth mode.

In the step 1104c, according to the third mode indicated by the mode instruction, the first medium circulating system is controlled to operate in the third preset mode, so that the air vent and the return air inlet of the compressor 118 are connected through the fifth heat exchanging unit 106, the first throttling unit 108, the first heat exchanging unit 102 and the third valve 122, and the second medium circulating system is controlled to operate.

Specifically, for example, the first medium enters the first heat exchanging unit 102 to be evaporated after being throttled by the first throttling unit 108 to cool the environment, and the second heat exchanging unit 104 stops cooling the energy storage material, so that the cold energy generated by the working of the first medium circulating system is mainly used to cool the environment; and at the same time, the second medium absorbs the cold energy of the energy storage material and then releases the cold energy to the environment through the third heat exchanging unit 302, so that the first heat exchanging unit 102 and the third heat exchanging unit 302 cool the environment simultaneously to realize strong cooling, and the demand of the user for indoor cooling at a higher rate can be satisfied.

For example, in the "third preset mode", the first medium circulating system works, the compressor 118 is started, the compressor 118 compresses the first medium, and the high-temperature high-pressure first medium formed by the compression is discharged into the fifth heat exchanging unit 106; the fifth heat exchanging unit 106 is used as a condenser for the first medium to exchange the heat with the airflow so as to cool the first medium; the gaseous first medium with higher temperature is converted into liquid to flow through the first heat exchanging unit 102, and is evaporated at a lower temperature in the first heat exchanging unit 102 to absorb the heat; and the first heat exchanging unit 102 is used as the evaporator to supply the cold energy to the outside through the first fan 602, and the third valve 122 is connected, so that the second throttling unit 110 and the second heat exchanging unit 104 are short-circuited, and the evaporated first medium enters the compressor 118 in a gaseous state, thereby completing the circulation of the refrigerant.

In the "third preset mode", the operation process of the second medium circulating system is the same as the operation process of the second medium circulating system in the step 1104b, which is not repeated here.

In the step 1104d, according to the fourth mode indicated by the mode instruction, the first medium circulating system is controlled to operate in a "fourth preset mode", so that the air vent and the return air inlet of the compressor 118 are connected through the fifth heat exchanging unit 106, the second valve 116, the second throttling unit 110 and the second heat exchanging unit 104, and the second medium circulating system is controlled to operate.

Specifically, for example, the first medium is throttled by the second throttling unit 110 and enters the second heat exchanging unit 104 to be evaporated so as to cool the energy storage material; at the same time, the driving apparatus 306 is controlled to start to enable the second medium in the second medium circulating system to circulate, thus realizing the operation of the second medium circulating system; and the second medium absorbs the cold energy of the energy storage material and then releases the cold energy to the environment through the third heat exchanging unit 302 so as to realize the strong cooling, so that the temperature of the cold wind provided to the environment is more moderate, the harsh cold feeling caused by the excessively low temperature may not be generated, and the comfortable use experience of the product can be improved.

For example, in the "fourth preset mode", the second valve 116 is controlled to open, so that the first throttling unit 108 and the first heat exchanging unit 102 are short-circuited; the first medium circulating system works, the compressor 118 is started, the compressor 118 compresses the first medium, and then the high-temperature high-pressure first medium formed by compression is discharged into the fifth heat exchanging unit 106; the fifth heat exchanging unit 106 is used as the condenser for the first medium to exchange the heat with the airflow so as to cool the first medium; the gaseous first medium with higher temperature is converted into a liquid state to flow through the second heat exchanging unit 104, and then the first medium is evaporated at the lower temperature in the second heat exchanging unit 104 to absorb the heat; and the second heat exchanging unit 104 is used as the evaporator to cool the energy storage material. In the "fourth preset mode", the operation process of the second medium circulating system is the same as the operation process of the second medium circulating system in the step 1104b, which is not repeated here.

It can be understood that as shown in Fig. 7, the second valve 116 is controlled to close; the first throttling unit 108 and the first heat exchanging unit 102 are connected; and at the time, operation steps of the air conditioner are the same as that in the step 1104b, which are not repeated here.

In the step 1104e, as shown in Fig. 4, according to the fifth mode indicated by the mode instruction, the first medium circulating system is controlled to operate in the fifth preset mode, so that the air vent and the return air inlet of the compressor 118 are connected through the fifth heat exchanging unit 106, the first valve 114, the third throttling unit 112 and the second heat exchanging unit 104, and the second medium circulating system is controlled to close.

Specifically, for example, the first medium enters the second heat exchanging unit 104 to be evaporated after being throttled by the third throttling unit 112 so as to cool the energy storage material, and the first heat exchanging unit 102, the first throttling unit 108 and the second throttling unit 110 do not work, so that the cold energy generated by the working of the first medium circulating system is mainly used to cool the energy storage material; at the same time, the driving apparatus 306 is controlled to close, so that the circulation of the second medium in the second medium circulating system is stopped, thereby closing the second medium circulating system, and realizing the ice storage only; and therefore, when it is unnecessary to use the first heat exchanging unit 102 to cool the environment, the unnecessary power consumption is avoided, and the energy conservation and emission reduction of the product can be realized.

For example, as shown in Fig. 4, in the "fifth preset mode", the first valve 114 is connected with the third throttling unit 112; the first medium circulating system works, the compressor 118 is started, the compressor 118 compresses the first medium, and then the high-temperature high-pressure first medium formed by compression is discharged into the fifth heat exchanging unit 106; the fifth heat exchanging unit 106 is used as the condenser for the first medium to exchange the heat with the airflow so as to cool the first medium, and the gaseous first medium with higher temperature is converted into a liquid state, and then flows to the second heat exchanging unit 104 after being throttled by the third throttling unit 112 and is evaporated at the lower temperature in the second heat exchanging unit 104 to absorb the heat; and the first heat exchanging unit 102 is used as the evaporator to provide the cold energy to the outside through the first fan 602, and the evaporated first medium enters the compressor 118 in the gaseous state, thereby completing the circulation of the refrigerant. In this mode, the first medium does not pass through the first throttling unit 108, the first heat exchanging unit 102 and the second throttling unit 110, the first fan 602 does not work, the driving apparatus 306 does not work, and the second medium circulating system works without cooling the environment.

When all the water in the container body 202 is converted into ice, the compressor 118 shall be controlled to close to stop the circulation of the first medium; or the operation mode is switched to other working modes, the temperature of the ice in the container body 202 is prevented from being lower than the freezing point of the second medium under the continuous heat absorption of the second heat exchanging unit 104, which makes the second medium frozen, and hinders the circulation of the refrigerant.

In the step 1104f, as shown in Fig. 8, according to the sixth mode indicated by the mode instruction, the first medium circulating system is controlled to operate in the sixth preset mode, so that the air vent and the return air inlet of the compressor 118 are connected through the fifth heat exchanging unit 106, the second valve 116, the second throttling unit 110 and the second heat exchanging unit 104, and the second medium circulating system is controlled to close.

Specifically, for example, the first medium enters the second heat exchanging unit 104 to be evaporated after being throttled by the second throttling unit 110 so as to cool the energy storage material, and the first heat exchanging unit 102, and the second and the first throttling units 108 do not work, so that the cold energy generated by the working of the first medium circulating system is mainly used to cool the energy storage material; and at the same time, the driving apparatus 306 is controlled to close to stop the circulation of the second medium in the second medium circulating system, thus closing the second medium circulating system and realizing the ice storage only, so that where it is unnecessary to use the first heat exchanging unit 102 to cool the environment, the unnecessary power consumption is avoided, and the energy conservation and emission reduction of the product can be realized.

In the step 1104g, as shown in Fig. 5, according to the seventh mode indicated by the mode instruction, the first medium circulating system is controlled to close, and the second medium circulating system is controlled to operate.

Specifically, for example, the compressor 118 is controlled to close to stop the circulation of the first medium in the first medium circulating system, thus closing the first medium circulating system; at the same time, the driving apparatus 306 is controlled to start to enable the second medium in the second medium circulating system to circulate, thus realizing the operation of the second medium circulating system; and the second medium absorbs the cold energy of the energy storage material and then releases the cold energy to the environment through the third heat exchanging unit 302 so as to cool the environment by the third heat exchanging unit 302 and realize the cooling by melting ice, so that the temperature of the cold wind provided to the environment is more moderate, the harsh cold feeling caused by the excessively low temperature may not be generated, and the comfortable use experience of the product can be improved.

In the step 1104h, as shown in Fig. 6, according to the eighth mode indicated by the mode instruction, the first fan 602 of the first medium circulating system is controlled to operate; at the moment, because the first medium in the first medium circulating system does not need to flow, the compressor 118 may be controlled correspondingly to close in the mode; furthermore, the electric heating apparatus 500 is controlled to operate, so that the first fan 602 drives the airflow to exchange the heat with the electric heating apparatus 500; and the second medium circulating system is controlled to close, that is, the driving apparatus 306 is controlled to close, so that the electric heating apparatus 500 heats the environment.

For example, as shown in Fig. 6, in the "eighth mode", both the compressor 118 and the driving apparatus 306 are stopped, and both the first medium circulating system and the second medium circulating system stop operating; and the electric heating apparatus 500 carried at the side of the first fan 602 is electrified, and the first fan 602 is started to supply the heat to the outside through an air duct.

In the step 1104i, as shown in Fig. 9, according to the ninth mode indicated by the mode instruction, the first medium circulating system is controlled to operate in the ninth preset mode, so that the air vent and the return air inlet of the compressor 118 are connected through the fifth heat exchanging unit 106, the first throttling unit 108, the first heat exchanging unit 102, the second throttling unit 110 and the second heat exchanging unit 104, and the second medium circulating system is controlled to operate; and in the ninth preset mode, the opening of the first throttling unit 108 and the second throttling unit 110 is greater than zero respectively, and the opening of the first throttling unit 108 is smaller than the opening of the second throttling unit 110.

Specifically, for example, the first medium is first evaporated to certain extent in the first heat exchanging unit 102, and then further evaporated in the second heat exchanging unit 104, thus can form the operation in the "first mode", so that the temperature of the cold wind provided to the environment is more moderate, the harsh cold feeling caused by the excessively low temperature may not be generated, and the comfortable use experience of the product can be improved. At the same time, the opening of the first throttling unit 108 is controlled to be smaller than the opening of the second throttling unit 110, so that the first medium is further throttled in the second throttling unit 110, and the throttling is more sufficient. The second medium circulating system operates, and the second medium absorbs the cold energy of the energy storage material, and then releases the cold energy to the environment through the third heat exchanging unit 302, so that the first heat exchanging unit 102 and the third heat exchanging unit 302 cool the environment simultaneously, and the demand of the user for indoor cooling at a higher rate can be satisfied.

In the step 1104j, according to the tenth mode indicated by the mode instruction, the first medium circulating system is controlled to operate in the tenth preset mode, so that the air vent and the return air inlet of the compressor 118 are controlled to be connected through the fifth heat exchanging unit 106, the first throttling unit 108, the first heat exchanging unit 102, the second throttling unit 110 and the second heat exchanging unit 104, and the second medium circulating system is controlled to close; and in the tenth preset mode, the opening of the first throttling unit 108 is a maximum threshold, and the opening of the second throttling unit 110 is greater than zero and less than the maximum threshold.

The opening of the first throttling unit 108 is the maximum threshold, so that in this way, the first medium flows to the first heat exchanging unit 102 without being throttled when flowing through the first throttling unit 108; the first heat exchanging unit 102 does not cool the environment; then the first medium flows to the second throttling unit 110 and is throttled fully by the second throttling unit 110 so as to cool the energy storage material, thereby realizing the ice storage only. In this way, the switching of the air conditioner modes can be realized by only controlling and adjusting the opening of the first throttling unit 108 and the second throttling unit 110, so that the number of components of the product can be further reduced, the assembling steps of the product can be reduced, and the cost of the product can be reduced.

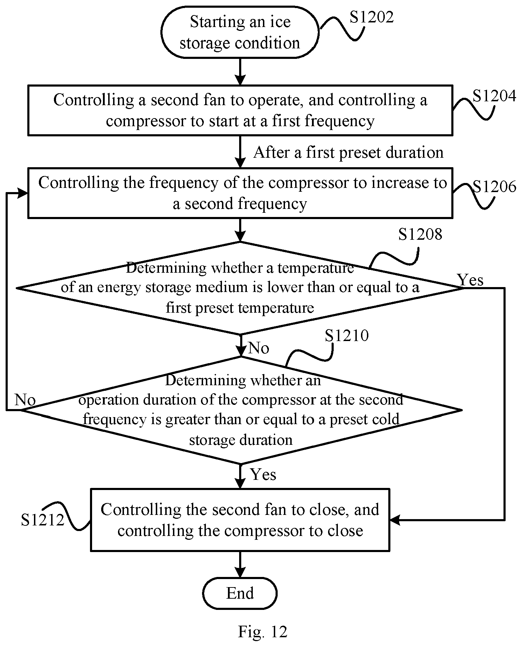

Further, as shown in Fig. 12, in any of the above methods, a process of the ice storage condition specifically includes the following steps:
Step 1202: the ice storage condition is started, and specifically, the ice storage condition is started according to a detected mode instruction;
Step 1204: the second fan 604 is controlled to operate, and the compressor 118 is controlled to start at a first frequency;
After a first preset duration, the step 1206 is executed: the frequency of the compressor 118 is controlled to increase to a second frequency;
Step 1208: whether the temperature of the energy storage medium is lower than or equal to a first preset temperature is determined; if yes, the step 1212 is executed, the second fan 604 is controlled to close, and the compressor 118 is controlled to close; otherwise, the step 1210 is executed; whether the operation duration of the compressor 118 at the second frequency is greater than or equal to a preset ice storage duration; if yes, the step 1212 is executed, the second fan 604 is controlled to close, and the compressor 118 is controlled to close; and otherwise, return to the step 1206, that is, the compressor 118 and the second fan 604 are controlled to continue to operate in the current state.

In this way, the compressor 118 and the second fan 604 are controlled to start or close according to the temperature of the energy storage medium of the energy storage apparatus 200 and the operation duration of the compressor 118 at the second frequency, so that the excessive energy storage of the energy storage material is avoided, and the control is more accurate.

A threshold of the first preset duration is 10 seconds to 20 seconds, and for example, the first preset duration is 15 seconds.

A threshold of the preset cold storage duration is 90 minutes to 150 minutes, and for example, the preset cold storage duration is 120 minutes.

A threshold of the first preset temperature is 3°C-8°C, and for example, the first preset temperature is 5°C.

Further, as shown in Fig. 13, a cooling control method for the air conditioner in any of the above embodiments specifically includes the following steps:
Step 1302: the air conditioner is controlled to operate according to a default outlet air temperature and a default gear of the first fan 602;
Step 1304: input information is detected;
Step 1306: whether output information contains the input outlet air temperature is determined; if the detected output information contains the input outlet air temperature, the step 1308 is executed: the input outlet air temperature is used as a set outlet air temperature; and if the detected output information does not contain the input outlet air temperature, the step 1310 is executed: the default outlet air temperature is used as the set outlet air temperature;
Step 1312: whether the output information contains input gear information is determined; and if the detected output information contains the input gear information, the step 1314 is executed: the first fan 602 is controlled to operate according to the input gear information, and if the detected output information does not contain the input gear information, the step 1316 is executed: the first fan 602 is controlled to operate according to a default gear of the first fan 602.
Step 1318: the outlet air temperature of the air conditioner is detected;
Step 1320: whether the detected outlet air temperature is greater than the set outlet air temperature by more than a first preset value; and if yes, the step 1322 is executed: the driving apparatus 306 is controlled to operate at a preset maximal rotation speed, and otherwise, the step 1324 is executed: whether the detected outlet air temperature is greater than the set outlet air temperature by more than a second preset value is determined, and if the detected outlet air temperature is greater than the set air vent temperature by more than the second preset value, the step 1326 is executed: the rotation speed of the driving apparatus 306 is controlled to increase by a preset difference from the current rotation speed, and if a difference between the detected outlet air temperature and the set outlet air temperature is less than the second preset value, the step 1328 is executed: the rotation speed of the driving apparatus 306 is controlled to decrease by the preset difference from the current rotation speed.

It may be understood that the input information is selected by the user according to the own demand; and the input information contains a plurality of gear information, and each gear contains the corresponding rotation speed of the first fan 602.

A value range of the first preset value is 3°C-8°C, and for example, the first preset value is 5°C.

A value range of the second preset value is -2°C-2°C, and for example, the first preset value is 0°C.

According to the fifth mode indicated by the mode instruction, the first fan 602 of the first medium circulating system is controlled to operate, and the electric heating apparatus 500 is controlled to operate, so that the first fan 602 drives the airflow to exchange the heat with the electric heating apparatus 500, and the second medium circulating system is controlled to close.

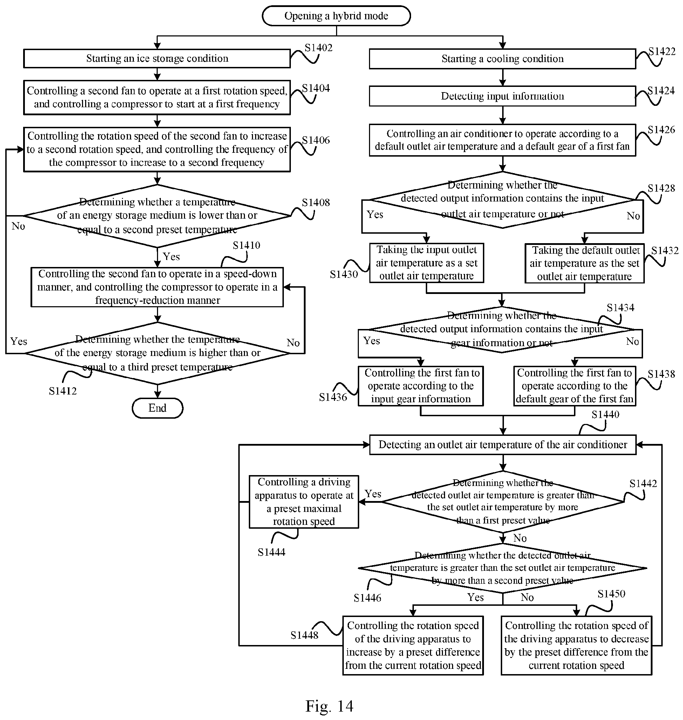

More further, as shown in Fig. 14, in any of the above embodiments, when the air conditioner operates under both the ice storage condition and the cooling condition, that is, when the air conditioner is in a hybrid mode, the following steps are included specifically:
Step 1402: the ice storage condition is started;
Step 1404: the second fan 604 is controlled to operate at a first rotation speed, and the compressor 118 is controlled to start at the first frequency;
After the first preset duration, the step 1406 is executed: the rotation speed of the second fan 604 is controlled to increase to a second rotation speed, and the frequency of the compressor 118 is controlled to increase to the second frequency;
Step 1408: whether the temperature of the energy storage medium is less than or equal to a second preset temperature is determined, and if yes, the step 1410 is executed: the second fan 604 is controlled to operate in a speed-down manner, the compressor 118 is controlled to operate in a frequency-reduction manner, and otherwise, return to the step 1406, that is, the second fan 604 is controlled to operate at the current rotation speed, and the compressor 118 is controlled to operate at the current frequency;
Step 1412: whether the temperature of the energy storage medium is greater than or equal to a third preset temperature;
If yes, return to the step 1406, that is, the second fan 604 is controlled to operate in a speed-up manner, and the compressor 118 is controlled to operate in a frequency-increasing manner; and otherwise, return to the step 1410, that is, the second fan 604 is controlled to operate at the current rotation speed, and the compressor 118 is controlled to operate at the current frequency.

The step 1402 and the step 1422 are carried out at the same time, specifically as follows:
Step 1422: the cooling condition is started;
Step 1424: the input information is detected;
Step 1426: the air conditioner is controlled to operate according to the default outlet air temperature and the default gear of the first fan 602;
Step 1428: whether the output information contains the input outlet air temperature is determined; if the detected output information contains the input outlet air temperature, the step 1430 is executed: the input outlet air temperature is used as the set outlet air temperature; if the detected output information does not contain the input outlet air temperature, the step 1432 is executed: the default outlet air temperature is used as the set outlet air temperature;
Step 1434: whether the output information contains the input gear information is determined; and if the detected output information contains the input gear information, the step 1436 is executed: the first fan 602 is controlled to operate according to the input gear information, and if the detected output information does not contain the input gear information, the step 1438 is executed: the first fan 602 is controlled to operate at the default gear of the first fan 602.
Step 1440: the outlet air temperature of the air conditioner is detected;
Step 1442: whether the detected outlet air temperature is greater than the set outlet air temperature by more than the first preset value is determined; if yes, the step 1444 is executed: the driving apparatus 306 is controlled to operate at the preset maximal rotation speed, and otherwise, the step 1442 is executed: whether the detected outlet air temperature is greater than the set air vent temperature by more than the second preset value is determined, and if the detected outlet air temperature is greater than the set air vent temperature by more than the second preset value, the step 1448 is executed: the rotation speed of the driving apparatus 306 is controlled to increase by the preset difference from the current rotation speed, and if the difference between the detected outlet air temperature and the set outlet air temperature is less than the second preset value, the step 1450 is executed: the rotation speed of the driving apparatus 306 is controlled to decrease by the preset difference from the current rotation speed.

As shown in Fig. 15, an example which is not part of the present invention provides an operation control apparatus 800, which is suitable for an air conditioner. The operation control apparatus 800 includes a processor 802, and the processor 802 implements the steps limited in the control method for the air conditioner described in the above embodiments when executing computer programs.

Specifically, the operation control apparatus 800 also includes a storage 804, the storage 804 has computer programs stored thereon, and the processor 802 can implement the steps limited in the control method for the air conditioner described in the above embodiments when executing the computer programs.

Specifically, the air conditioner includes a first medium circulating system, a second medium circulating system and an energy storage apparatus 200; the operation control apparatus 800 is electrically connected with the first medium circulating system, the second medium circulating system and the energy storage apparatus 200, and controls the first medium circulating system, the second medium circulating system and the energy storage apparatus 200 to operate according to a working mode indicated by a mode instruction.

In the present invention, the terms "installed", "connected", "connection" and "fixed" should be understood in a broad sense, for example, the "connection" can be a fixed connection, a detachable connection, or an integral connection; and the "connection" may be a direct connection or an indirect connection through an intermediate medium. For those ordinary skilled in the art, the specific meaning of the above terms in the present invention may be understood in specific circumstances.

In the description of the present invention, it should be noted that the terms "inside", "outside", and the like indicating the orientation or positional relationship are based on the orientation or positional relationship shown in the drawings, and are only used for convenience in describing the present invention and simplifying the description, rather than indicating or implying that specific devices or elements must have a specific direction and be constructed and operated in a specific orientation. Therefore, the terms cannot be understood as limitations to the present invention.

In the description of the present invention, descriptions of terms "one embodiment", "some embodiments", "specific embodiments" etc. mean specific features, structures, materials, or characteristics described in conjunction with the embodiment or example are contained in at least one embodiment or example of the present invention. In the present specification, the schematic representations of the above terms are not necessary for the same embodiment or example. Moreover, the described specific features, structures, materials or characteristics may be combined in an appropriate way in any or more embodiments or examples.

## Claims

1. An air conditioner, comprising: a first medium circulating system comprising a first heat exchanging unit (102), a second heat exchanging unit (104), a fifth heat exchanging unit (106), a first throttling unit (108) and a second throttling unit (110), wherein the first heat exchanging unit (102) is serially connected between the first throttling unit (108) and the second throttling unit (110), the second throttling unit (110) is serially connected between the first heat exchanging unit (102) and the second heat exchanging unit (104), the first throttling unit (108) is serially connected between the fifth heat exchanging unit (106) and the first heat exchanging unit (102), and the first heat exchanging unit (102) and the fifth heat exchanging unit (106) are used to exchange heat with an environment respectively; an energy storage apparatus (200), being provided with an energy storage material, wherein the second heat exchanging unit (104) exchanges heat with the energy storage material.

2. The air conditioner according to claim 1, wherein the first medium circulating system further comprises: a third throttling unit (112), wherein a branch formed by the first throttling unit (108), the first heat exchanging unit (102) and the second throttling unit (110) in series connection is connected with the third throttling unit (112) in parallel; and a first valve (114), wherein the first valve (114) is connected with the third throttling unit (112), the fifth heat exchanging unit (106) and the first throttling unit (108); the first valve (114) has a first position and a second position; the first valve (114) controls the fifth heat exchanging unit (106) to be connected with the first throttling unit (108), and controls the fifth heat exchanging unit (106) to be disconnected to the third throttling unit (112) at the first position, and controls the fifth heat exchanging unit (106) to be disconnected to the first throttling unit (108) and controls the fifth heat exchanging unit (106) to be connected to the third throttling unit (112) at the second position.

3. The air conditioner according to claim 1, wherein the first medium circulating system further comprises: a second valve (116), wherein a branch formed by the first throttling unit (108) and the first heat exchanging unit (102) in series connection is connected with the second valve (116) in parallel; the second valve (116) has a first on position and a first off position; and the second valve (116) enables the branch arranged in parallel with the second valve (116) to be short-circuited at the first on position, and enables the branch arranged in parallel with the second valve (116) to be connected at the first off position.

4. The air conditioner according to claim 1, wherein the first medium circulating system further comprises: a second valve (116), wherein a branch formed by the first heat exchanging unit (102) and the second throttling unit (110) in series connection is connected with the second valve (116) in parallel; the second valve (116) has a first on position and a first off position; and the second valve (116) enables the branch arranged in parallel with the second valve (116) to be short-circuited at the first on position, and enables the branch arranged in parallel with the second valve (116) to be connected at the first off position, optionally, wherein the first throttling unit (108) is an expansion valve with adjustable openings.

5. The air conditioner according to claim 1, wherein the first throttling unit (108) is a capillary tube adapted to the first heat exchanging unit (102), and the second throttling unit (110) is a capillary tube adapted to the second heat exchanging unit (104); or one or both of the first throttling unit (108) and the second throttling unit (110) are expansion valves with adjustable openings.

6. The air conditioner according to claim 2, wherein the third throttling unit (112) is a capillary tube adapted to the second heat exchanging unit (104); or the third throttling unit (112) is an expansion valve with adjustable opening.

7. The air conditioner according to claim 3, wherein the second throttling unit (110) is an expansion valve with adjustable opening.

8. The air conditioner according to any one of claims 1-7, wherein the first medium circulating system is formed with a first loop; the first heat exchanging unit (102), the second heat exchanging unit (104), the first throttling unit (108) and the second throttling unit (110) form a part of the first loop, wherein the first loop is provided with a compressor (118) and a reversing device (120); the compressor (118) is provided with an air vent and a return air inlet; the reversing device (120) is connected with the air vent, the return air inlet, the second heat exchanging unit (104) and the fifth heat exchanging unit (106); the reversing device (120) has a third position and a fourth position; the reversing device (120) connects the air vent and the fifth heat exchanging unit (106), and connects the return air inlet and the second heat exchanging unit (104) at the third position; and the reversing device (120) connects the air vent and the second heat exchanging unit (104), and connects the return air inlet and the fifth heat exchanging unit (106) at the fourth position, or, wherein the first medium circulating system further comprises: a third valve (122); a branch formed by the second throttling unit (110) and the second heat exchanging unit (104) in series connection is connected with the third valve (122) in parallel; the third valve (122) has a second on position and a second off position; and the third valve (122) enables the branch arranged in parallel with the third valve (122) to be short-circuited at the second on position, and enables the branch arranged in parallel with the third valve (122) to be connected at the second off position.

9. The air conditioner according to any one of claims 1-7, further comprising: a second medium circulating system, wherein the second medium circulating system is formed with a second loop, and comprises a third heat exchanging unit (302) and a fourth heat exchanging unit (304) formed in the second loop; and the third heat exchanging unit (302) is used to exchange the heat with the environment, and the fourth heat exchanging unit (304) exchanges the heat with the energy storage material, optionally, wherein the energy storage apparatus (200) comprises a container body (202); the energy storage material is accommodated in the container body (202), wherein at least one part of the second heat exchanging unit (104) is located in the container body (202) and contacts the energy storage material; and/or at least one part of the fourth heat exchanging unit (304) is located in the container body (202) and contacts the energy storage material.

10. The air conditioner according to claim 9, wherein a driving apparatus (306) is arranged in the second loop, and the driving apparatus (306) is configured to drive a second medium in the second loop optionally, further comprising: an electrical storage device (400); wherein the electrical storage device (400) is electrically connected with the driving apparatus (306) and supplies power to the driving apparatus (306); and/or the electrical storage device (400) is electrically connected with the compressor (118) of the first medium circulating system and supplies power to the compressor (118) of the first medium circulating system.

11. The air conditioner according to claim 9, wherein the first medium circulating system is provided with a first fan (602); and the first fan (602) is used to drive airflow to exchange the heat with the first heat exchanging unit (102) and the third heat exchanging unit (302).

12. The air conditioner according to claim 11, wherein the first heat exchanging unit (102) and the third heat exchanging unit (302) are arranged along a wind direction; and a surface temperature of one of the first heat exchanging unit (102) and the third heat exchanging unit (302) is higher than that of the other one, and one of the first heat exchanging unit (102) and the third heat exchanging unit (302) with higher surface temperature is located at an air inlet side of one with lower surface temperature.

13. The air conditioner according to claim 11, further comprising: an electric heating apparatus (500); the first fan (602) is configured to drive airflow to exchange the heat with the electric heating apparatus (500), so that the electric heating apparatus (500) supplies the heat to the environment.

14. The air conditioner according to any one of claims 1-7, further comprising: a shell (900); wherein the air conditioner is an integrated air conditioner, and the shell is formed as a shell (900) of the integrated air conditioner.

15. A control method for the air conditioner of any one of claims 9-13, comprising the following steps: controlling (S1104a) the first medium circulating system to operate in a first preset mode according to a first mode indicated by a mode instruction, so that the air vent and the return air inlet of the compressor (118) are connected through the fifth heat exchanging unit (106), the first throttling unit (108), the first heat exchanging unit (102), the second throttling unit (110) and the second heat exchanging unit (104), and controlling the second medium circulating system to close;
controlling (S1104b) the first medium circulating system to operate in a second preset mode according to a second mode indicated by the mode instruction, so that the air vent and the return air inlet of the compressor (118) are connected through the fifth heat exchanging unit (106), the first throttling unit (108), the first heat exchanging unit (102), the second throttling unit (110) and the second heat exchanging unit (104), and controlling the second medium circulating system to operate; controlling (S1104c) the first medium circulating system to operate in a third preset mode according to a third mode indicated by the mode instruction, so that the air vent and the return air inlet of the compressor (118) are connected through the fifth heat exchanging unit (106), the first throttling unit (108), the first heat exchanging unit (102) and the third valve (122), and controlling the second medium circulating system to operate;
controlling (S1 104d) the first medium circulating system to operate in a fourth preset mode according to a fourth mode indicated by the mode instruction, so that the air vent and the return air inlet of the compressor (118) are connected through the fifth heat exchanging unit (106), the second valve (116), the second throttling unit (110) and the second heat exchanging unit (104), and controlling the second medium circulating system to operate;
controlling (S1 104e) the first medium circulating system to operate in a fifth preset mode according to a fifth mode indicated by the mode instruction, so that the air vent and the return air inlet of the compressor (118) are connected through the fifth heat exchanging unit (106), the first valve (114), the third throttling unit (112) and the second heat exchanging unit (104), and controlling the second medium circulating system to close;
controlling (S1104f) the first medium circulating system to operate in a sixth preset mode according to a sixth mode indicated by the mode instruction, so that the air vent and the return air inlet of the compressor (118) are connected through the fifth heat exchanging unit (106), the second valve (116), the second throttling unit (110) and the second heat exchanging unit (104), and controlling the second medium circulating system to close;
controlling (S1104g) the first medium circulating system to close according to a seventh mode indicated by the mode instruction, and controlling the second medium circulating system to operate;
controlling (S1104h) the first fan (602) of the first medium circulating system to operate according to an eighth mode indicated by the mode instruction, and controlling the electric heating apparatus (500) to operate, so that the first fan (602) drives the airflow to exchange the heat with the electric heating apparatus (500), and controlling the second medium circulating system to close;
controlling (S1104i) the first medium circulating system to operate in a ninth preset mode according to a ninth mode indicated by the mode instruction, so that the air vent and the return air inlet of the compressor (118) are connected through the fifth heat exchanging unit (106), the first throttling unit (108), the first heat exchanging unit (102), the second throttling unit (110) and the second heat exchanging unit (104), and controlling the second medium circulating system to operate, wherein in the ninth preset mode, the opening of the first throttling unit (108) and the second throttling unit (110) is greater than zero respectively, and the opening of the first throttling unit (108) is smaller than the openings of the second throttling unit (110); and
controlling (S1104j) the first medium circulating system to operate in a tenth preset mode according to a tenth mode indicated by the mode instruction, so that the air vent and the return air inlet of the compressor (118) are connected through the fifth heat exchanging unit (106), the first throttling unit (108), the first heat exchanging unit (102), the second throttling unit (110) and the second heat exchanging unit (104), and controlling the second medium circulating system to close, wherein in the tenth preset mode, the opening of the first throttling unit (108) is a maximal threshold, and the opening of the second throttling unit (110) is greater than zero and less than the maximal threshold.

## Patentansprüche

1. Klimaanlage, umfassend: ein erstes Mediumumwälzsystem, umfassend eine erste Wärmetauschereinheit (102), eine zweite Wärmetauschereinheit (104), eine fünfte Wärmetauschereinheit (106), eine erste Drosseleinheit (108) und eine zweite Drosseleinheit (110), wobei die erste Wärmetauschereinheit (102) zwischen der ersten Drosseleinheit (108) und der zweiten Drosseleinheit (110) in Reihe geschaltet ist, die zweite Drosseleinheit (110) zwischen der ersten Wärmetauschereinheit (102) und der zweiten Wärmetauschereinheit (104) in Reihe geschaltet ist, die erste Drosseleinheit (108) zwischen der fünften Wärmetauschereinheit (106) und der ersten Wärmetauschereinheit (102) in Reihe geschaltet ist und die erste Wärmetauschereinheit (102) und die fünfte Wärmetauschereinheit (106) jeweils dazu verwendet werden, Wärme mit einer Umgebung auszutauschen; eine Energiespeichervorrichtung (200), die mit einem Energiespeichermaterial versehen ist, wobei die zweite Wärmetauschereinheit (104) mit dem Energiespeichermaterial Wärme austauscht.

2. Klimaanlage nach Anspruch 1, wobei das erste Mediumumwälzsystem ferner Folgendes umfasst: eine dritte Drosseleinheit (112), wobei ein von der ersten Drosseleinheit (108), der ersten Wärmetauschereinheit (102) und der zweiten Drosseleinheit (110) in Reiheinschaltung gebildeter Zweig mit der dritten Drosseleinheit (112) parallel geschaltet ist; und ein erstes Ventil (114), wobei das erste Ventil (114) mit der dritten Drosseleinheit (112), der fünften Wärmetauschereinheit (106) und der ersten Drosseleinheit (108) verbunden ist; das erste Ventil (114) eine erste Stellung und eine zweite Stellung aufweist; das erste Ventil (114) in der ersten Stellung die fünfte Wärmetauschereinheit (106) dazu steuert, mit der ersten Drosseleinheit (108) verbunden zu sein, und die fünfte Wärmetauschereinheit (106) dazu steuert, von der dritten Drosseleinheit (112) getrennt zu sein, und in der zweiten Stellung die fünfte Wärmetauschereinheit (106) dazu steuert, von der ersten Drosseleinheit (108) getrennt zu sein, und die fünfte Wärmetauschereinheit (106) dazu steuert, mit der dritten Drosseleinheit (112) verbunden zu sein.

3. Klimaanlage nach Anspruch 1, wobei das erste Mediumumwälzsystem ferner Folgendes umfasst: ein zweites Ventil (116), wobei ein von der ersten Drosseleinheit (108) und der ersten Wärmetauschereinheit (102) in Reihenschaltung gebildeter Zweig mit dem zweiten Ventil (116) parallel geschaltet ist; das zweite Ventil (116) eine erste Ein-Stellung und eine erste Aus-Stellung aufweist; und das zweite Ventil (116) ermöglicht, dass der zu dem zweiten Ventil (116) parallel angeordnete Zweig in der ersten Ein-Stellung kurzgeschlossen ist, und ermöglicht, dass der zu dem zweiten Ventil (116) parallel angeordnete Zweig in der ersten Aus-Stellung verbunden ist.

4. Klimaanlage nach Anspruch 1, wobei das erste Mediumumwälzsystem ferner Folgendes umfasst: ein zweites Ventil (116), wobei ein von der ersten Wärmetauschereinheit (102) und der zweiten Drosseleinheit (110) in Reihenschaltung gebildeter Zweig mit dem zweiten Ventil (116) parallel geschaltet ist; das zweite Ventil (116) eine erste Ein-Stellung und eine erste Aus-Stellung aufweist; und das zweite Ventil (116) ermöglicht, dass der zu dem zweiten Ventil (116) parallel angeordnete Zweig in der ersten Ein-Stellung kurzgeschlossen ist, und ermöglicht, dass der zu dem zweiten Ventil (116) parallel angeordnete Zweig in der ersten Aus-Stellung verbunden ist, wobei es sich optional bei der ersten Drosseleinheit (108) um ein Expansionsventil mit verstellbaren Öffnungen handelt.

5. Klimaanlage nach Anspruch 1, wobei es sich bei der ersten Drosseleinheit (108) um eine Kapillarröhre handelt, die an die erste Wärmetauschereinheit (102) angepasst ist, und es sich bei der zweiten Drosseleinheit (110) um eine Kapillarröhre handelt, die an die zweite Wärmetauschereinheit (104) angepasst ist; oder es sich bei der ersten Drosseleinheit (108) und/oder der zweiten Drosseleinheit (110) um Expansionsventile mit verstellbaren Öffnungen handelt.

6. Klimaanlage nach Anspruch 2, wobei es sich bei der dritten Drosseleinheit (112) um eine Kapillarröhre handelt, die an die zweite Wärmetauschereinheit (104) angepasst ist; oder es sich bei der dritten Drosseleinheit (112) um ein Expansionsventil mit verstellbarer Öffnung handelt.

7. Klimaanlage nach Anspruch 3, wobei es sich bei der zweiten Drosseleinheit (110) um ein Expansionsventil mit verstellbarer Öffnung handelt.

8. Klimaanlage nach einem der Ansprüche 1-7, wobei das erste Mediumumwälzsystem mit einer ersten Schleife gebildet ist; die erste Wärmetauschereinheit (102), die zweite Wärmetauschereinheit (104), die erste Drosseleinheit (108) und die zweite Drosseleinheit (110) einen Teil der ersten Schleife bilden, wobei die erste Schleife mit einem Verdichter (118) und einer Umkehreinrichtung (120) versehen ist; der Verdichter (118) mit einer Entlüftung und einem Rücklufteinlass versehen ist; die Umkehreinrichtung (120) mit der Entlüftung, dem Rücklufteinlass, der zweiten Wärmetauschereinheit (104) und der fünften Wärmetauschereinheit (106) verbunden ist; die Umkehreinrichtung (120) eine dritte Stellung und eine vierte Stellung aufweist; die Umkehreinrichtung (120) in der dritten Stellung die Entlüftung und die fünfte Wärmetauschereinheit (106) verbindet und den Rücklufteinlass und die zweite Wärmetauschereinheit (104) verbindet; und die Umkehreinrichtung (120) in der vierten Stellung die Entlüftung und die zweite Wärmetauschereinheit (104) verbindet und den Rücklufteinlass und die fünfte Wärmetauschereinheit (106) verbindet, oder wobei das erste Mediumumwälzsystem ferner Folgendes umfasst: ein drittes Ventil (122); wobei ein von der zweiten Drosseleinheit (110) und der zweiten Wärmetauschereinheit (104) in Reihenschaltung gebildeter Zweig mit dem dritten Ventil (122) parallel geschaltet ist; wobei das dritte Ventil (122) eine zweite Ein-Stellung und eine zweite Aus-Stellung aufweist; und das dritte Ventil (122) in der zweiten Ein-Stellung ermöglicht, dass der zu dem dritten Ventil (122) parallel angeordnete Zweig kurzgeschlossen ist, und in der zweiten Aus-Stellung ermöglicht, dass der zu dem dritten Ventil (122) parallel angeordnete Zweig verbunden ist.

9. Klimaanlage nach einem der Ansprüche 1-7, ferner umfassend: ein zweites Mediumumwälzsystem, wobei das zweite Mediumumwälzsystem mit einer zweiten Schleife gebildet ist und eine dritte Wärmetauschereinheit (302) und eine vierte Wärmetauschereinheit (304) umfasst, die in der zweiten Schleife gebildet sind; und die dritte Wärmetauschereinheit (302) dazu verwendet wird, die Wärme mit der Umgebung auszutauschen, und die vierte Wärmetauschereinheit (304) die Wärme mit dem Energiespeichermaterial austauscht, wobei optional die Energiespeichervorrichtung (200) einen Behälterkörper (202) umfasst; das Energiespeichermaterial in dem Behälterkörper (202) aufgenommen ist, wobei sich mindestens ein Teil der zweiten Wärmetauschereinheit (104) in dem Behälterkörper (202) und mit dem Energiespeichermaterial in Kontakt befindet; und/oder sich mindestens ein Teil der vierten Wärmetauschereinheit (304) in dem Behälterkörper (202) und mit dem Energiespeichermaterial in Kontakt befindet.

10. Klimaanlage nach Anspruch 9, wobei eine Antriebsvorrichtung (306) in der zweiten Schleife angeordnet ist und die Antriebsvorrichtung (306) dazu konfiguriert ist, ein zweites Medium in der zweiten Schleife anzutreiben, optional ferner umfassend: eine elektrische Speichervorrichtung (400); wobei die elektrische Speichervorrichtung (400) elektrisch mit der Antriebsvorrichtung (306) verbunden ist und die Antriebsvorrichtung (306) mit Strom versorgt; und/oder die elektrische Speichervorrichtung (400) elektrisch mit dem Verdichter (118) des ersten Mediumumwälzsystems verbunden ist und den Verdichter (118) des ersten Medienumwälzsystem mit Strom versorgt.

11. Klimaanlage nach Anspruch 9, wobei das erste Mediumumwälzsystem mit einem ersten Gebläse (602) versehen ist; und das erste Gebläse (602) verwendet wird, um einen Luftstrom anzutreiben, um die Wärme mit der ersten Wärmetauschereinheit (102) und der dritten Wärmetauschereinheit (302) auszutauschen.

12. Klimaanlage nach Anspruch 11, wobei die erste Wärmetauschereinheit (102) und die dritte Wärmetauschereinheit (302) entlang einer Luftzugrichtung angeordnet sind; und eine Oberflächentemperatur einer von der ersten Wärmetauschereinheit (102) und der dritten Wärmetauschereinheit (302) höher als diejenige der anderen ist und sich eine von der ersten Wärmetauschereinheit (102) und der dritten Wärmetauschereinheit (302) mit höherer Oberflächentemperatur auf einer Lufteinlassseite einer mit niedrigerer Oberflächentemperatur befindet.

13. Klimaanlage nach Anspruch 11, ferner umfassend: eine elektrische Heizvorrichtung (500); wobei das erste Gebläse (602) dazu konfiguriert ist, einen Luftstrom anzutreiben, um die Wärme mit der elektrischen Heizvorrichtung (500) auszutauschen, sodass die elektrische Heizvorrichtung (500) die Wärme der Umgebung zuführt.

14. Klimaanlage nach einem der Ansprüche 1-7, ferner umfassend: eine Hülle (900); wobei es sich bei der Klimaanlage um eine integrierte Klimaanlage handelt und die Hülle als Hülle (900) der integrierten Klimaanlage gebildet ist.

15. Steuerverfahren für die Klimaanlage nach einem der Ansprüche 9-13, umfassend folgende Schritte:
Steuern (S1104a) des ersten Mediumumwälzsystems dazu, in einem ersten voreingestellten Modus gemäß einem von einer Modusanweisung angegebenen ersten Modus zu arbeiten, sodass die Entlüftung und der Rücklufteinlass des Verdichters (118) über die fünfte Wärmetauschereinheit (106), die erste Drosseleinheit (108), die erste Wärmetauschereinheit (102), die zweite Drosseleinheit (110) und die zweite Wärmetauschereinheit (104) verbunden sind, und Steuern des zweiten Mediumumwälzsystems dazu, zu schließen;
Steuern (S 1104b) des ersten Mediumumwälzsystems dazu, in einem zweiten voreingestellten Modus gemäß einem von der Modusanweisung angegebenen zweiten Modus zu arbeiten, sodass die Entlüftung und der Rücklufteinlass des Verdichters (118) über die fünfte Wärmetauschereinheit (106), die erste Drosseleinheit (108), die erste Wärmetauschereinheit (102), die zweite Drosseleinheit (110) und die zweite Wärmetauschereinheit (104) verbunden sind, und Steuern des zweiten Mediumumwälzsystems dazu, zu arbeiten;
Steuern (S 1104c) des ersten Mediumumwälzsystems dazu, in einem dritten voreingestellten Modus gemäß einem von der Modusanweisung angegebenen dritten Modus zu arbeiten, sodass die Entlüftung und der Rücklufteinlass des Verdichters (118) über die fünfte Wärmetauschereinheit (106), die erste Drosseleinheit (108), die erste Wärmetauschereinheit (102) und das dritte Ventil (122) verbunden sind, und Steuern des zweiten Mediumumwälzsystems dazu, zu arbeiten;
Steuern (S 1104d) des ersten Mediumumwälzsystems dazu, in einem vierten voreingestellten Modus gemäß einem von der Modusanweisung angegebenen vierten Modus zu arbeiten, sodass die Entlüftung und der Rücklufteinlass des Verdichters (118) über die fünfte Wärmetauschereinheit (106), das zweite Ventil (116), die zweite Drosseleinheit (110) und die zweite Wärmetauschereinheit (104) verbunden sind, und Steuern des zweiten Mediumumwälzsystems dazu, zu arbeiten;
Steuern (S 1104e) des ersten Mediumumwälzsystems dazu, in einem fünften voreingestellten Modus gemäß einem von der Modusanweisung angegebenen fünften Modus zu arbeiten, sodass die Entlüftung und der Rücklufteinlass des Verdichters (118) über die fünfte Wärmetauschereinheit (106), das erste Ventil (114), die dritte Drosseleinheit (112) und die zweite Wärmetauschereinheit (104) verbunden sind, und Steuern des zweiten Mediumumwälzsystems dazu, zu schließen;
Steuern (S1104f) des ersten Mediumumwälzsystems dazu, in einem sechsten voreingestellten Modus gemäß einem von der Modusanweisung angegebenen sechsten Modus zu arbeiten, sodass die Entlüftung und der Rücklufteinlass des Verdichters (118) über die fünfte Wärmetauschereinheit (106), das zweite Ventil (116), die zweite Drosseleinheit (110) und die zweite Wärmetauschereinheit (104) verbunden sind, und Steuern des zweiten Mediumumwälzsystems dazu, zu schließen;
Steuern (S 1104g) des ersten Mediumumwälzsystems dazu, gemäß einem von der Modusanweisung angegebenen siebten Modus zu schließen, und Steuern des zweiten Mediumumwälzsystems dazu, zu arbeiten;
Steuern (S 1104h) des ersten Gebläses (602) des ersten Mediumumwälzsystems dazu, gemäß einem von der Modusanweisung angegebenen achten Modus zu arbeiten, und Steuern der elektrischen Heizvorrichtung (500) dazu, zu arbeiten, sodass das erste Gebläse (602) den Luftstrom antreibt, um die Wärme mit der elektrischen Heizvorrichtung (500) auszutauschen, und Steuern des zweiten Mediumumwälzsystems dazu, zu schließen;
Steuern (S1104i) des ersten Mediumumwälzsystems dazu, in einem neunten voreingestellten Modus gemäß einem von der Modusanweisung angegebenen neunten Modus zu arbeiten, sodass die Entlüftung und der Rücklufteinlass des Verdichters (118) über die fünfte Wärmetauschereinheit (106), die erste Drosseleinheit (108), die erste Wärmetauschereinheit (102), die zweite Drosseleinheit (110) und die zweite Wärmetauschereinheit (104) verbunden sind, und Steuern des zweiten Mediumumwälzsystems dazu, zu arbeiten, wobei in dem neunten voreingestellten Modus die Öffnung der ersten Drosseleinheit (108) und der zweiten Drosseleinheit (110) jeweils größer als null ist, und die Öffnung der ersten Drosseleinheit (108) kleiner als die Öffnungen der zweiten Drosseleinheit (110) ist; und
Steuern (S1104j) des ersten Mediumumwälzsystems dazu, in einem zehnten voreingestellten Modus gemäß einem von der Modusanweisung angegebenen zehnten Modus zu arbeiten, sodass die Entlüftung und der Rücklufteinlass des Verdichters (118) über die fünfte Wärmetauschereinheit (106), die erste Drosseleinheit (108), die erste Wärmetauschereinheit (102), die zweite Drosseleinheit (110) und die zweite Wärmetauschereinheit (104) verbunden sind, und Steuern des zweiten Mediumumwälzsystems dazu, zu schließen, wobei in dem zehnten voreingestellten Modus die Öffnung der ersten Drosseleinheit (108) eine maximale Schwelle ist und die Öffnung der zweiten Drosseleinheit (110) größer als null und kleiner als die maximale Schwelle ist.

## Revendications

1. Climatiseur, comportant : un premier système de circulation de milieu comportant une première unité d'échange de chaleur (102), une deuxième unité d'échange de chaleur (104), une cinquième unité d'échange de chaleur (106), une première unité d'étranglement (108) et une deuxième unité d'étranglement (110), dans lequel la première unité d'échange de chaleur (102) est raccordée en série entre la première unité d'étranglement (108) et la deuxième unité d'étranglement (110), la deuxième unité d'étranglement (110) est raccordée en série entre la première unité d'échange de chaleur (102) et la deuxième unité d'échange de chaleur (104), la première unité d'étranglement (108) est raccordée en série entre la cinquième unité d'échange de chaleur (106) et la première unité d'échange de chaleur (102), et la première unité d'échange de chaleur (102) et la cinquième unité d'échange de chaleur (106) sont utilisées pour échanger de la chaleur avec un environnement respectivement ; un appareil de stockage d'énergie (200), comportant un matériau de stockage d'énergie, dans lequel la deuxième unité d'échange de chaleur (104) échange de la chaleur avec le matériau de stockage d'énergie.

2. Climatiseur selon la revendication 1, dans lequel le premier système de circulation de milieu comporte par ailleurs : une troisième unité d'étranglement (112), dans lequel une ramification formée par la première unité d'étranglement (108), la première unité d'échange de chaleur (102) et la deuxième unité d'étranglement (110) en un raccordement en série est raccordée à la troisième unité d'étranglement (112) en parallèle ; et une première soupape (114), dans lequel la première soupape (114) est raccordée à la troisième unité d'étranglement (112), à la cinquième unité d'échange de chaleur (106) et à la première unité d'étranglement (108) ; la première soupape (114) a une première position et une deuxième position ; la première soupape (114) commande la cinquième unité d'échange de chaleur (106) à des fins de raccordement à la première unité d'étranglement (108), et commande la cinquième unité d'échange de chaleur (106) à des fins de séparation par rapport à la troisième unité d'étranglement (112) sur la première position, et commande la cinquième unité d'échange de chaleur (106) à des fins de séparation par rapport à la première unité d'étranglement (108) et commande la cinquième unité d'échange de chaleur (106) à des fins de raccordement à la troisième unité d'étranglement (112) sur la deuxième position.

3. Climatiseur selon la revendication 1, dans lequel le premier système de circulation de milieu comporte par ailleurs : une deuxième soupape (116), dans lequel une ramification formée par la première unité d'étranglement (108) et la première unité d'échange de chaleur (102) en un raccordement en série est raccordée à la deuxième soupape (116) en parallèle ; la deuxième soupape (116) a une première position de marche et une première position d'arrêt ; et la deuxième soupape (116) permet à la ramification agencée en parallèle avec la deuxième soupape (116) d'être mise en court-circuit sur la première position de marche, et permet à la ramification agencée en parallèle avec la deuxième soupape (116) d'être raccordée sur la première position d'arrêt.

4. Climatiseur selon la revendication 1, dans lequel le premier système de circulation de milieu comporte par ailleurs : une deuxième soupape (116), dans lequel une ramification formée par la première unité d'échange de chaleur (102) et la deuxième unité d'étranglement (110) en un raccordement en série est raccordée à la deuxième soupape (116) en parallèle ; la deuxième soupape (116) a une première position de marche et une première position d'arrêt ; et la deuxième soupape (116) permet à la ramification agencée en parallèle avec la deuxième soupape (116) d'être mise en court-circuit sur la première position de marche, et permet à la ramification agencée en parallèle avec la deuxième soupape (116) d'être raccordée sur la première position d'arrêt, éventuellement, dans lequel la première unité d'étranglement (108) est une soupape de dilatation avec des ouvertures ajustables.

5. Climatiseur selon la revendication 1, dans lequel la première unité d'étranglement (108) est un tube capillaire adapté sur la première unité d'échange de chaleur (102), et la deuxième unité d'étranglement (110) est un tube capillaire adapté sur la deuxième unité d'échange de chaleur (104) ; ou l'une ou les deux parmi la première unité d'étranglement (108) et la deuxième unité d'étranglement (110) sont des soupapes de dilatation avec des ouvertures ajustables.

6. Climatiseur selon la revendication 2, dans lequel la troisième unité d'étranglement (112) est un tube capillaire adapté sur la deuxième unité d'échange de chaleur (104) ; ou la troisième unité d'étranglement (112) est une soupape de dilatation avec une ouverture ajustable.

7. Climatiseur selon la revendication 3, dans lequel la deuxième unité d'étranglement (110) est une soupape de dilatation avec une ouverture ajustable.

8. Climatiseur selon l'une quelconque des revendications 1 à 7, dans lequel le premier système de circulation de milieu est formé avec une première boucle ; la première unité d'échange de chaleur (102), la deuxième unité d'échange de chaleur (104), la première unité d'étranglement (108) et la deuxième unité d'étranglement (110) forment une partie de la première boucle, dans lequel la première boucle comporte un compresseur (118) et un dispositif d'inversion (120) ; le compresseur (118) comporte un évent d'aération et une entrée d'air de retour ; le dispositif d'inversion (120) est raccordé à l'évent d'aération, à l'entrée d'air de retour, à la deuxième unité d'échange de chaleur (104) et à la cinquième unité d'échange de chaleur (106) ; le dispositif d'inversion (120) a une troisième position et une quatrième position ; le dispositif d'inversion (120) raccorde l'évent d'aération et la cinquième unité d'échange de chaleur (106), et raccorde l'entrée d'air de retour et la deuxième unité d'échange de chaleur (104) sur la troisième position ; et le dispositif d'inversion (120) raccorde l'évent d'aération et la deuxième unité d'échange de chaleur (104), et raccorde l'entrée d'air de retour et la cinquième unité d'échange de chaleur (106) sur la quatrième position, ou, dans lequel le premier système de circulation de milieu comporte par ailleurs : une troisième soupape (122) ; une ramification formée par la deuxième unité d'étranglement (110) et la deuxième unité d'échange de chaleur (104) en un raccordement en série est raccordée à la troisième soupape (122) en parallèle ; la troisième soupape (122) a une deuxième position de marche et une deuxième position d'arrêt ; et la troisième soupape (122) permet à la ramification agencée en parallèle avec la troisième soupape (122) d'être mise en court-circuit sur la deuxième position de marche, et permet à la ramification agencée en parallèle avec la troisième soupape (122) d'être raccordée sur la deuxième position d'arrêt.

9. Climatiseur selon l'une quelconque des revendications 1 à 7, comportant par ailleurs : un deuxième système de circulation de milieu, dans lequel le deuxième système de circulation de milieu est formé avec une deuxième boucle, et comporte une troisième unité d'échange de chaleur (302) et une quatrième unité d'échange de chaleur (304) formées dans la deuxième boucle ; et la troisième unité d'échange de chaleur (302) est utilisée pour échanger la chaleur avec l'environnement, et la quatrième unité d'échange de chaleur (304) échange la chaleur avec le matériau de stockage d'énergie, éventuellement, dans lequel l'appareil de stockage d'énergie (200) comporte un corps formant contenant (202) ; le matériau de stockage d'énergie est reçu dans le corps formant contenant (202), dans lequel au moins une partie de la deuxième unité d'échange de chaleur (104) est située dans le corps formant contenant (202) et est en contact avec le matériau de stockage d'énergie ; et/ou au moins une partie de la quatrième unité d'échange de chaleur (304) est située dans le corps formant contenant (202) et est en contact avec le matériau de stockage d'énergie.

10. Climatiseur selon la revendication 9, dans lequel un appareil d'entraînement (306) est agencé dans la deuxième boucle, et l'appareil d'entraînement (306) est configuré pour entraîner un deuxième milieu dans la deuxième boucle éventuellement, comportant par ailleurs : un dispositif de stockage électrique (400) ; dans lequel le dispositif de stockage électrique (400) est connecté électriquement à l'appareil d'entraînement (306) et fournit de la puissance à l'appareil d'entraînement (306) ; et/ou le dispositif de stockage électrique (400) est connecté électriquement au compresseur (118) du premier système de circulation de milieu et fournit de la puissance au compresseur (118) du premier système de circulation de milieu.

11. Climatiseur selon la revendication 9, dans lequel le premier système de circulation de milieu comporte un premier ventilateur (602) ; et le premier ventilateur (602) est utilisé pour entraîner le flux d'air à des fins d'échange de la chaleur avec la première unité d'échange de chaleur (102) et la troisième unité d'échange de chaleur (302).

12. Climatiseur selon la revendication 11, dans lequel la première unité d'échange de chaleur (102) et la troisième unité d'échange de chaleur (302) sont agencées le long de la direction du vent ; et une température de surface de l'une parmi la première unité d'échange de chaleur (102) et la troisième unité d'échange de chaleur (302) est supérieure à celle de l'autre, et l'une parmi la première unité d'échange de chaleur (102) et la troisième unité d'échange de chaleur (302) ayant une température de surface supérieure est située au niveau d'un côté d'entrée d'air de l'une ayant une température de surface inférieure.

13. Climatiseur selon la revendication 11, comportant par ailleurs : un appareil de chauffage électrique (500) ; le premier ventilateur (602) est configuré pour entraîner le flux d'air à des fins d'échange de la chaleur avec l'appareil de chauffage électrique (500), de telle sorte que l'appareil de chauffage électrique (500) fournit la chaleur à l'environnement.

14. Climatiseur selon l'une quelconque des revendications 1 à 7, comportant par ailleurs : une coque (900) ; dans lequel le climatiseur est un climatiseur intégré, et la coque est formée sous la forme d'une coque (900) du climatiseur intégré.

15. Procédé de commande pour le climatiseur selon l'une quelconque des revendications 9 à 13, comportant les étapes suivantes consistant à : commander (S1104a) le premier système de circulation de milieu à des fins de fonctionnement dans un premier mode prédéfini en fonction d'un premier mode indiqué par une instruction de mode, de telle sorte que l'évent d'aération et l'entrée d'air de retour du compresseur (118) sont raccordés par l'intermédiaire de la cinquième unité d'échange de chaleur (106), de la première unité d'étranglement (108), de la première unité d'échange de chaleur (102), de la deuxième unité d'étranglement (110) et de la deuxième unité d'échange de chaleur (104), et commander le deuxième système de circulation de milieu à des fins de fermeture ;
commander (S1104b) le premier système de circulation de milieu à des fins de fonctionnement dans un deuxième mode prédéfini en fonction d'un deuxième mode indiqué par l'instruction de mode, de telle sorte que l'évent d'aération et l'entrée d'air de retour du compresseur (118) sont raccordés par l'intermédiaire de la cinquième unité d'échange de chaleur (106), de la première unité d'étranglement (108), de la première unité d'échange de chaleur (102), de la deuxième unité d'étranglement (110) et de la deuxième unité d'échange de chaleur (104), et commander le deuxième système de circulation de milieu à des fins de fonctionnement ;
commander (S1104c) le premier système de circulation de milieu à des fins de fonctionnement dans un troisième mode prédéfini en fonction d'un troisième mode indiqué par l'instruction de mode, de telle sorte que l'évent d'aération et l'entrée d'air de retour du compresseur (118) sont raccordés par l'intermédiaire de la cinquième unité d'échange de chaleur (106), de la première unité d'étranglement (108), de la première unité d'échange de chaleur (102) et de la troisième soupape (122), et commander le deuxième système de circulation de milieu à des fins de fonctionnement ;
commander (S1104d) le premier système de circulation de milieu à des fins de fonctionnement dans un quatrième mode prédéfini en fonction d'un quatrième mode indiqué par l'instruction de mode, de telle sorte que l'évent d'aération et l'entrée d'air de retour du compresseur (118) sont raccordés par l'intermédiaire de la cinquième unité d'échange de chaleur (106), de la deuxième soupape (116), de la deuxième unité d'étranglement (110) et de la deuxième unité d'échange de chaleur (104), et commander le deuxième système de circulation de milieu à des fins de fonctionnement ;
commander (S1104e) le premier système de circulation de milieu à des fins de fonctionnement dans un cinquième mode prédéfini en fonction d'un cinquième mode indiqué par l'instruction de mode, de telle sorte que l'évent d'aération et l'entrée d'air de retour du compresseur (118) sont raccordés par l'intermédiaire de la cinquième unité d'échange de chaleur (106), de la première soupape (114), de la troisième unité d'étranglement (112) et de la deuxième unité d'échange de chaleur (104), et commander le deuxième système de circulation de milieu à des fins de fermeture ;
commander (S1104f) le premier système de circulation de milieu à des fins de fonctionnement dans un sixième mode prédéfini en fonction d'un sixième mode indiqué par l'instruction de mode, de telle sorte que l'évent d'aération et l'entrée d'air de retour du compresseur (118) sont raccordés par l'intermédiaire de la cinquième unité d'échange de chaleur (106), de la deuxième soupape (116), de la deuxième unité d'étranglement (110) et de la deuxième unité d'échange de chaleur (104), et commander le deuxième système de circulation de milieu à des fins de fermeture ;
commander (S1104g) le premier système de circulation de milieu à des fins de fermeture en fonction d'un septième mode indiqué par l'instruction de mode, et commander le deuxième système de circulation de milieu à des fins de fonctionnement ;
commander (S1104h) le premier ventilateur (602) du premier système de circulation de milieu à des fins de fonctionnement en fonction d'un huitième mode indiqué par l'instruction de mode, et commander l'appareil de chauffage électrique (500) à des fins de fonctionnement, de telle sorte que le premier ventilateur (602) entraîne le flux d'air à des fins d'échange de la chaleur avec l'appareil de chauffage électrique (500), et commander le deuxième système de circulation de milieu à des fins de fermeture ;
commander (S1104i) le premier système de circulation de milieu à des fins de fonctionnement dans un neuvième mode prédéfini en fonction d'un neuvième mode indiqué par l'instruction de mode, de telle sorte que l'évent d'aération et l'entrée d'air de retour du compresseur (118) sont raccordés par l'intermédiaire de la cinquième unité d'échange de chaleur (106), de la première unité d'étranglement (108), de la première unité d'échange de chaleur (102), de la deuxième unité d'étranglement (110) et de la deuxième unité d'échange de chaleur (104), et commander le deuxième système de circulation de milieu à des fins de fonctionnement, dans lequel, dans un neuvième mode prédéfini, l'ouverture de la première unité d'étranglement (108) et de la deuxième unité d'étranglement (110) est supérieure à zéro respectivement, et l'ouverture de la première unité d'étranglement (108) est inférieure par rapport aux ouvertures de la deuxième unité d'étranglement (110) ; et
commander (S1104j) le premier système de circulation de milieu à des fins de fonctionnement dans un dixième mode prédéfini en fonction d'un dixième mode indiqué par l'instruction de mode, de telle sorte que l'évent d'aération et l'entrée d'air de retour du compresseur (118) sont raccordés par l'intermédiaire de la cinquième unité d'échange de chaleur (106), de la première unité d'étranglement (108), de la première unité d'échange de chaleur (102), de la deuxième unité d'étranglement (110) et de la deuxième unité d'échange de chaleur (104), et commander le deuxième système de circulation de milieu à des fins de fermeture, dans lequel, dans un dixième mode prédéfini, l'ouverture de la première unité d'étranglement (108) est un seuil maximal, et l'ouverture de la deuxième unité d'étranglement (110) est supérieure à zéro et inférieure au seuil maximal.
